# EUROPEAN PATENT SPECIFICATION

(11) **EP 3 068 113 B1**
(45) Date of publication and mention of the grant of the patent: **02.10.2019**
(21) Application number: 16159552.5
(22) Date of filing: 10.03.2016
(51) Int. Cl.: H04M 1/02, H04M 1/18, H04M 1/60, H04M 1/725

(54) **ELECTRONIC DEVICE AND OPERATION METHOD THEREOF**
ELEKTRONISCHE VORRICHTUNG UND BETRIEBSVERFAHREN DAFÜR
DISPOSITIF ÉLECTRONIQUE ET PROCÉDÉ DE CONTRÔLE DE CELUI-CI

(30) Priority: 11.03.2015 KR 20150033608
(43) Date of publication of application: 14.09.2016
(73) Proprietor: Samsung Electronics Co., Ltd., Gyeonggi-do 16677 (KR)
(72) Inventor: LEE, Yong-Suk, 1667 Gyeonggi-do (KR); CHOI, Sung-Woo, 16677 Gyeonggi-do (KR)
(74) Representative: Grootscholten, Johannes A.M.

(56) References cited:
- US-A1- 2006 060 762
- US-A1- 2009 167 545
- US-A1- 2013 328 825
- US-A1- 2014 306 553
- US-A1- 2015 043 156

## Description

### TECHNICAL FIELD

The present disclosure relates to an electronic device, an operation method thereof, and a recording medium.

### BACKGROUND

Recently, due to the rapid supply of electronic devices such as smart phones, trend of a communication network has been evolving to provide one device per person. Accordingly, the electronic device has become a part of a user. In practice, the user of the electronic device carries the electronic device during a large portion of user's daily life and spends a lot of time of their daily life acquiring various pieces of information from the electronic device.

An electronic device may provide a user a battery, a connector, and/or a socket. The user of the electronic device may open or cover (such as close) a battery cover, a connector cover, or a socket cover in order to replace the battery of the electronic device, connect a charging terminal to the connector to charge the battery, or insert a portable memory card or a USIM card into the socket of the electronic device. Additionally or alternatively, reference is made here to the prior art disclosures in US-2015/043156; US-2006/060762; and US-2009/167545, relative to which at least the features in the characterizing portions of the appended independent claims are novel and involve an inventive step. US-2014/306553 discloses detection of a protective flip cover.

### SUMMARY

In a process of covering the battery cover, the connector cover, the socket cover, or the like (referred to as "the battery cover or the like" as necessary in the present disclosure), the battery cover, the connector cover, the socket cover, or the like may not be completely (or precisely) covered. Particularly, when a portion generated by the incomplete covering of the battery cover is too small to be recognized by the user, if the electronic device is an electronic device, which provides, for example, a waterproofing function, liquid such as water passes into the electronic device, which causes a serious problem like a malfunction of the electronic device.

The present disclosure provides, when the battery cover, the connector cover, the socket cover, or the like, included in the electronic device is not completely covered, an electronic device for performing a function/functions or an operation/operations to detect the incomplete covering.

The present disclosure provides, when the battery cover, the connector cover, the socket cover, or the like, included in the electronic device is not completely covered, an electronic device for detecting the incomplete covering and performing a function/functions or an operation/operations to inform the user of the electronic device of the incomplete covering.

The present disclosure provides, when the battery cover, the connector cover, the socket cover, or the like, included in the electronic device is not completely covered, a method of operating an electronic device for performing a function/functions or an operation/operations through which the incomplete covering can be detected.

The present disclosure provides, when the battery cover, the connector cover, the socket cover, or the like, included in the electronic device is not completely covered, a method of operating an electronic device for detecting the incomplete covering and performing a function/functions or an operation/operations to inform the user of the electronic device of the incomplete covering.

In accordance with an aspect of the present disclosure, an electronic device is provided to exhibit features of the appended independent device claim.

In accordance with another aspect of the present disclosure, a method of operating an electronic device is provided to exhibit features of the appended independent method claim.

According to the present disclosure, when a battery cover, a connector cover, or a socket cover, included in the electronic device is not completely covered, the incomplete covering can be detected.

According to the present disclosure, when a battery cover, a connector cover, or a socket cover, included in the electronic device is not completely covered, the incomplete covering can be detected and informed to a user of the electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an example of a network environment including an electronic device according to various embodiments of the present disclosure;
FIG. 2A is a block diagram illustrating an example of an electronic device according to various embodiments of the present disclosure;
FIG. 2B is a front perspective view illustrating an example of an electronic device according to various embodiments of the present disclosure;
FIG. 2C is a rear perspective view illustrating an example of an electronic device according to various embodiments of the present disclosure;
FIG. 2D illustrates an example of a main body of an electronic device and a battery cover part according to various embodiments of the present disclosure;
FIG. 2E illustrates an example of a process in which the main body of the electronic device and the battery cover part are coupled according to various embodiments of the present disclosure;
FIGs. 3A and 3B illustrate an example of a function or operation in which an electronic device outputs a first signal and receives second signals when a battery cover part of the electronic device completely covers a main body according to various embodiments of the present disclosure;
FIG. 3C illustrates an example of second signals received when the battery cover part of the electronic device completely covers the main body according to various embodiments of the present disclosure;
FIGs. 4A to 4F illustrate an example of a function or operation in which an electronic device outputs a first signal and receives second signals when a battery cover part of the electronic device incompletely covers a main body according to various embodiments of the present disclosure;
FIG. 4G illustrates an example of second signals received when the battery cover part of the electronic device incompletely covers the main body according to various embodiments of the present disclosure;
FIG. 4H illustrates an example of a normal coupling signal 462 received when the battery cover part 470 of the electronic device 40 completely covers the main body and an abnormal coupling signal, which is distorted due to a leak path as illustrated in FIG. 4A;
FIGs. 5A to 5C illustrate an embodiment of displaying a notification message based on a location of an incompletely coupled portion of a battery cover part of an electronic device according to various embodiments of the present disclosure;
FIGs. 6A and 6B illustrate an example of a function or operation in which an electronic device outputs a first signal and receives second signals when a connector cover part of the electronic device completely covers a connector according to various embodiments of the present disclosure;
FIG. 6C illustrates an example of second signals received when the connector cover part of the electronic device completely covers the connector according to various embodiments of the present disclosure;
FIG. 6D illustrates an example of a function or operation in which the electronic device outputs a first signal and receives second signals when the connector cover part of the electronic device incompletely covers the connector according to various embodiments of the present disclosure;
FIG. 6E illustrates an example of second signals received when the connector cover part of the electronic device incompletely covers the connector according to various embodiments of the present disclosure;
FIG. 6F illustrates an example of a normal coupling signal received when the connector cover part of the electronic device completely covers the connector and an abnormal coupling signal received when the connector cover part of the electronic device incompletely covers the connector according to various embodiments of the present disclosure;
FIG. 7 illustrates an embodiment of displaying a notification message according to a location of a connector cover part of an electronic device, which incompletely covers the connector, according to various embodiments of the present disclosure;
FIG. 8 is a flowchart illustrating an operation method of the electronic device according to various embodiments of the present disclosure;
FIG. 9 is a block diagram illustrating an example of an electronic device according to various embodiments of the present disclosure; and
FIG. 10 is a block diagram illustrating an example of a program module according to various embodiments.

### DETAILED DESCRIPTION

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. The above expressions are used merely for the purpose of distinguishing an element from the other elements. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of' according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude embodiments of the present disclosure.

For example, the electronic device may include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

According to some embodiments, the electronic device may be a smart home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSyncTM, Apple TVTM, or Google TVTM), a game console (e.g., XboxTM and PlayStationTM), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

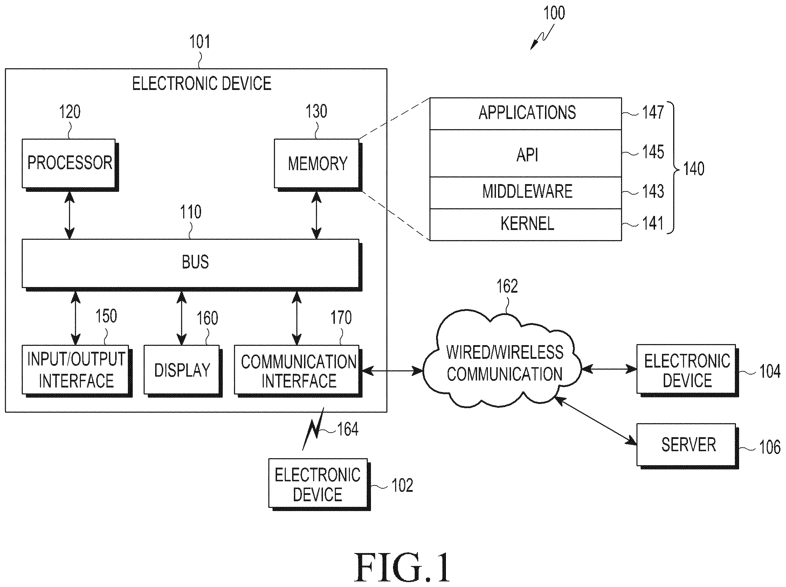

An electronic device 101 within a network environment 100, according to various embodiments, will be described with reference to FIG. 1. The electronic device 101 may include a bus 110, a processor 120, a memory 130, an input/output interface 150, a display 160, and a communication interface 170. According to some embodiments, the electronic device 101 may omit at least one of the elements or further include other elements.

The bus 110 may include, for example, a circuit for connecting the elements 110 to 170 to each other and transferring communication (for example, a control message and/or data) between the elements.

The processor 120 may include one or more of a Central Processing Unit (CPU), an Application Processor (AP), and a Communication Processor (CP). The processor 120 may, for example, carry out operations or data processing related to control and/or communication of at least one other element of the electronic device 101.

The memory 130 may include a volatile memory and/or a non-volatile memory. The memory 130 may store, for example, instructions or data related to at least one other element of the electronic device 101. According to an embodiment, the memory 130 may store software and/or a program 140. The program 140 may include a kernel 141, middleware 143, an Application Programming Interface (API) 145, and/or an application program (or "application") 147. At least some of the kernel 141, the middleware 143, and the API 145 may be referred to as an Operating System (OS).

The kernel 141 may control or manage system resources (for example, the bus 110, the processor 120, or the memory 130) used for performing an operation or function implemented in the other programs (for example, the middleware 143, the API 145, or the application programs 147). Furthermore, the kernel 141 may provide an interface through which the middleware 143, the API 145, or the application program 147 may access individual components of the electronic device 101 to control or manage system resources.

For example, the middleware 143 may serve as a relay for allowing the API 145 or the application programs 147 to communicate with the kernel 141 to exchange data. Furthermore, in regard to task requests received from the application program 147, the middleware 143 may perform a control (for example, scheduling or load balancing) for the task requests using, for example, a method of assigning a priority for using the system resources (for example, the bus 110, the processor 120, or the memory 130) of the electronic device 101 to at least one application of the application programs 147.

The API 145 is an interface by which the applications 147 control functions provided from the kernel 141 or the middleware 143, and may include, for example, at least one interface or function (for example, instructions) for file control, window control, image processing, or text control.

The input/output interface 150 may serve as an interface that may transfer instructions or data, which is input from a user or another external device, to another element(s) of the electronic device 101. Further, the input/output interface 150 may output instructions or data received from another element(s) of the electronic device 101 to a user or another external device.

The display 160 may include, for example, a liquid crystal display (LCD), a light emitting diode (LED) display, an organic light emitting diode (OLED) display, a micro electro mechanical system (MEMS) display, or an electronic paper display. The display 160 may display, for example, various pieces of content (for example, text, images, videos, icons, symbols, and the like) to the user. The display 160 may include a touch screen and receive, for example, a touch input, a gesture input, a proximity input, or a hovering input using an electronic pen or a user's body part.

The communication interface 170 may set, for example, communication between the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106).

The wireless communication may use, for example, at least one of LTE, LTE-A, CDMA, WCDMA, UMTS, WiBro, and GSM, for example, as a cellular communication protocol. The wired communication may include, for example, at least one of a universal serial bus (USB), a high definition multimedia interface (HDMI), recommended standard 232 (RS-232), and a plain Old Telephone Service (POTS). The network 162 may include at least one of communication networks such as a computer network (for example, a LAN or a WAN), the Internet, and a telephone network.

Each of the first and second external electronic devices 102 and 104 may be a device which is the same type as or a different type from the electronic device 101. According to an embodiment, the server 106 may include a group of one or more servers. According to various embodiments, all or some of the operations performed by the electronic device 101 may be performed by another electronic device or a plurality of electronic devices (for example, the electronic device 102 or 104 or the server 106). According to an embodiment, when the electronic device 101 has to perform some functions or services automatically or by request, the electronic device 101 may make a request for performing at least some functions related to the functions or services to another device (for example, the electronic device 102 or 104 or the server 106) instead of or additionally performing the functions or services by itself. The other electronic device (for example, the electronic device 102 or 104 or the server 106) may carry out the requested function or the additional function and transfer a result thereof to the electronic device 101. The electronic device 101 may provide the requested functions or services based on the received result as it is or after additionally processing the received result. To achieve this, for example, cloud computing, distributed computing, or client-server computing technology may be used.

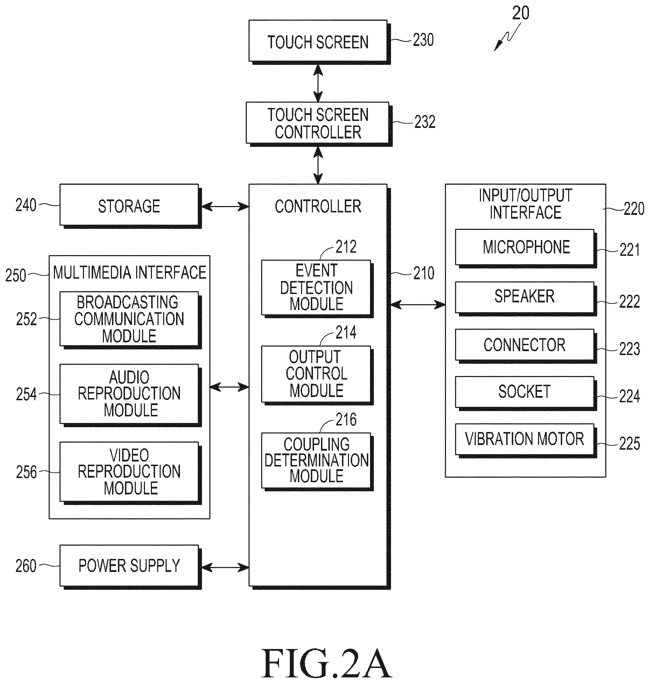

FIG. 2A is a block diagram illustrating an example of an electronic device according to various embodiments of the present disclosure.

An electronic device 20 according to various embodiments of the present disclosure may include a controller 210, an input/output interface 220, a touch screen 230, a touch screen controller 232, a storage 240, a multimedia interface 250, and a power supply 260. The input/output interface 220, the touch screen 230, the touch screen controller 232, the storage 240, the multimedia interface 250, and the power supply 260 may be controlled by the controller 210.

The controller 210 according to various embodiments of the present disclosure may include a Central Processing Unit (CPU), a Read Only Memory (ROM), which stores a control program for controlling the electronic device 20, and a Random Access Memory (RAM), which is used as a storage area for storing a signal or data input from the outside of the electronic device 20 or for work performed in the electronic device 20. The CPU, the RAM and/or the ROM may be connected with each other through internal buses. The control module 210 may include an event detection module 212, an output control module 214, and a coupling determination module 216.

The event detection module 212 may detect the generation of an event related to a coupling between the electronic device 20 and a cover part (for example, a battery cover part (for example, a battery cover part 270, a connector cover part 226a, or a socket cover part).

The output control module 214 may output a first signal (for example, a first signal 380) for determining a coupling state of the cover part 270 with respect to the electronic device 20. The term "first signal" may be referred to as an "output signal" as necessary in the present disclosure. Further, according to the present disclosure, the term "completely covered state" may be interchanged with various terms such as "a normally coupled state", "a correctly coupled state", and "a first state". In addition, according to the present disclosure, the term "incompletely covered state" may be interchanged with various terms such as "an incompletely coupled state" "an abnormally coupled state", "an incorrectly coupled state", and "a second state".

The coupling determination module 216 may determine a coupling state of the cover part with respect to the electronic device based on a physical quantity (the term "physical quantity for attributes of the second signal" may be abbreviated to the "second signal" or "a physical quantity of the second signal" as necessary in the present disclosure) for attributes (for example, amplitude, phase and/or frequency) of the received second signal (for example, a second signal 384 or 386). The term "second signal" may be referred to as an "input signal" as necessary in the present disclosure.

Various functions or operations performed by the controller 210, the event detection module 212, the output control module 214, and/or the coupling determination module 216 may be performed by the processor 120. Further, according to various embodiments of the present disclosure, at least one module of the event detection module 212, the output control module 214, and the coupling determination module 216 may be configured as a module separated from the controller 210.

The input/output interface 220 may include at least one of a microphone 221, a speaker 222, a connector 223, a socket 224, and a vibration module 225.

The microphone 221 may receive a voice or a sound to generate an electrical signal according to a control of the controller 210.

The speaker 222 may output sounds corresponding to various signals (for example, a wireless signal, a broadcasting signal, a digital audio file, a digital video file, capturing a picture, or the like) to the outside of the electronic device 20 according to a control of the controller 210. The speaker 222 may output a sound (for example, button tone corresponding to a phone call, or ringing tone) corresponding to a function performed by the electronic device 20. One or more speakers 222 may be formed at a suitable position or positions of the housing of the electronic device 20.

The connector 223 may be used as an interface for connecting the electronic device 20 with an external device (not shown) or a power source (not shown). The electronic device 20 may transmit or receive data stored in the storage 240 of the electronic device 20 to or from an external device (not shown) through a wired cable connected to the connector 223 according to a control of the controller 210. At this time, the external device may be a docking station, and the data may be input signals transmitted from an external input device, for example a mouse, a keyboard, and the like. Further, the electronic device 20 may receive power from a power source (not shown) through a wired cable connected to the connector 223, or may charge a battery (not shown) by using the power source.

An external memory such as a subscriber identity module (for example, SIM card), a compact flash (CF), a secure digital (SD), a micro secure digital (Micro-SD), a mini secure digital (Mini-SD), an extreme digital (xD), a memory stick, or the like may be inserted into the socket 224.

The vibration motor 225 may convert an electric signal into a mechanical vibration under a control of the controller 210. For example, when the electronic device 20 in a vibration mode receives a voice call from another device (not shown), the vibration motor 225 may operate. One or a plurality of vibration motors 225 may be formed within the housing of the electronic device 20. The vibration motor 225 may operate in response to a user's touch action of touching the touch screen 230 and/or successive touch motions on the touch screen 230.

The touch screen 230 may provide a user interface corresponding to various services (for example, a phone call, data transmission, broadcasting, and photographing a picture) to the user. The touch screen 230 may transmit an analog signal corresponding to at least one touch input into the user interface to the touch screen controller 232. The touch screen 230 may receive one or more touches through a user's body (for example, fingers including a thumb) or a touch input means (for example, a stylus pen). The touch screen 230 may receive successive motions of one touch among the one or more touches. The touch screen 230 may transmit an analog signal corresponding to the successive motions of the input touch to the touch screen controller 232.

The touch mentioned in the present disclosure is not limited to a contact between the touch screen 230 and the user's body or the touch input means and may include a non-contact touch. The detectable interval of the touch screen 230 may be changed according to a capability or structure of the electronic device 20. The touch screen 230 may be implemented, for example, in a resistive type, a capacitive type, an infrared type, or an acoustic wave type.

The touch screen controller 232 may convert the analog signal received from the touch screen 230 into a digital signal (for example, X and Y coordinates) and transmit the digital signal to the controller 210. The controller 210 may control the touch screen 230 by using the digital signal received from the touch screen controller 232. For example, the controller 210 may select or execute a short-cut icon displayed on the touch screen 230 in response to the touch. According to various embodiments of the present disclosure, various functions or operations performed by the touch screen controller 232 may be performed by the controller 210.

The storage 240 may store signals or data input/output based on an operation of each element included in the electronic device 20 according to a control of the controller 210. The storage 240 may store control programs and applications for controlling the electronic device 20 or the controller 210 The term "storage" may include the storage 240, the ROM and the RAM included in the controller 210, and/or the memory card inserted into (in other words, mounted to) the electronic device 20. The storage 240 may include a non-volatile memory, a volatile memory, a Hard Disk Drive (HDD), or a Solid State Drive (SSD).

The multimedia interface 250 may include a broadcasting communication module 252, an audio reproduction module 254 and/or a video reproduction module 256. The broadcasting communication module 252 may receive a broadcasting signal (for example, a TV broadcasting signal, a radio broadcasting signal, or a data broadcasting signal) and broadcasting supplement information (for example, Electric Program Guide: EPG or Electric Service Guide: ESG) output from a broadcasting station through a broadcasting communication antenna according to a control of the controller 210. The audio reproduction module 252 may reproduce a stored or received digital audio file (for example, a file having a file extension of mp3, wma, ogg, or wav) according to a control of the controller 210. The video reproduction module 256 may reproduce a stored or received digital video file (for example, a file having the file extension of mpeg, mpg, mp4, avi, mov, or mkv) according to a control of the controller 210. The video reproduction module 256 may reproduce a digital audio file.

The power supply 260 may supply power to one or a plurality of batteries included in the housing of the electronic device 20 according to a control of the controller 210. The one or the plurality of batteries (not shown) may supply power to the electronic device 20. The power supply 260 may supply power, which is input from an external power source (not shown) through a wired cable connected to the connector 223, to the electronic device 20. The power supply 260 may supply power, which is wirelessly input from the external power source through a wireless charging technology, to the electronic device 20.

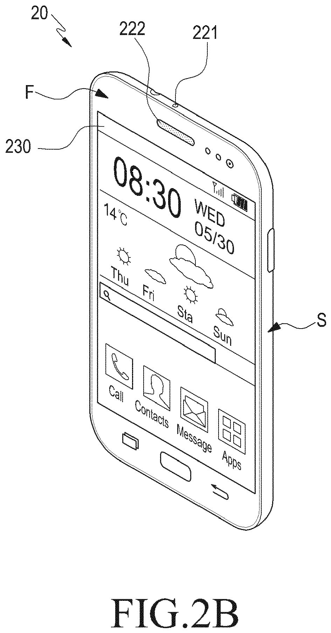

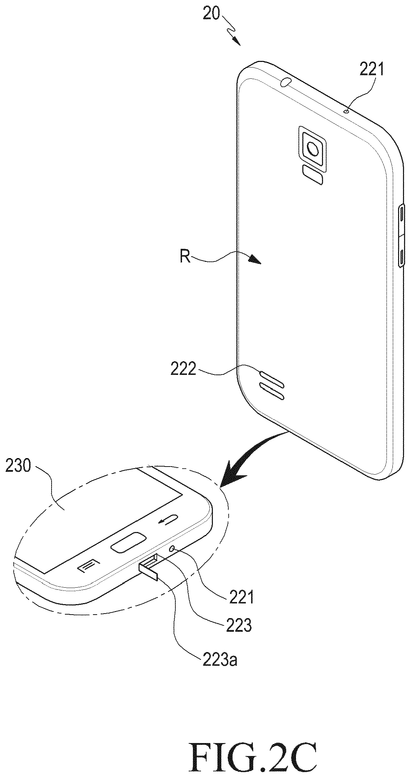

FIG. 2B is a front perspective view illustrating an example of the electronic device according to various embodiments of the present disclosure, and FIG. 2C is a rear perspective view illustrating an example of the electronic device according to various embodiments of the present disclosure.

Referring to FIGs. 2B and 2C, the touch screen 230 may be located on the front surface (F) of the electronic device 20. A home button, a menu button, and a back button may be arranged on the lower part of the touch screen 230.

A first camera, an illumination sensor, and a proximity sensor may be located on the front surface (F) of the electronic device 20. A second camera, a flash, and the speaker 222 may be located on the rear surface (R) of the electronic device 20.

For example, a power/reset button, a volume control button, a terrestrial DMB antenna for broadcasting reception, and one or a plurality of microphones may be located on the side surface (S) of the electronic device 20. Further, according to various embodiments of the present disclosure, the socket 224 may be located on the side surface (S) of the electronic device 20.

The connector 23 may be located on the lower part of the electronic device 20. A plurality of electrodes may be formed in the connector 223, and the connector 165 may be connected to an external device through a wire.

In the present disclosure, the term "upper part of the electronic device" may refer to a direction in which the front (F) speaker 222 of the electronic device 20 is located when the electronic device 20 is located as illustrated in FIG. 2B. Further, in the present disclosure, the term "lower part of the electronic device" may refer to a direction opposite to the direction in which the front (F) speaker 222 of the electronic device 20 is located, that is a direction in which the home button is located when the electronic device 20 is located as illustrated in FIG. 2B.

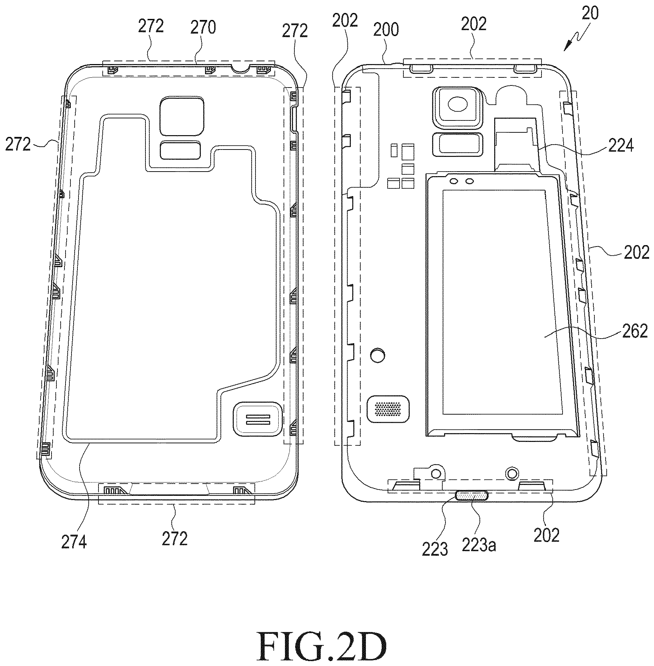

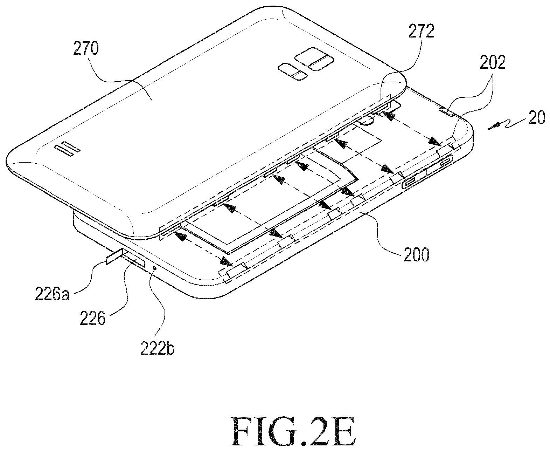

FIG. 2D illustrates an example of a main body 200 of the electronic device 20 and the battery cover part 270 according to various embodiments of the present disclosure, and FIG. 2E illustrates an example of a process in which the main body 200 of the electronic device 20 is coupled with the battery cover part 270 according to various embodiments of the present disclosure.

Referring to FIGs. 2D and 2E, the electronic device 20 may include the main body 200 and the battery cover part 270. The main body 200 and the battery cover part 270 may be connected to be attached to/detached from each other as illustrated in FIG. 2E. The main body 200 may include a first connection part 202 for connecting the electronic device 20 to be attached to/detached from the battery cover part 270. The first connection part 202 may be physically connected to a second connection part 272 included in the battery cover part 270. The main body 200 may include a battery 262, the connector 223, and a connector cover 223a for protecting the connector 223. The battery 262 may be configured to be attached to/detached from the main body 200. The socket 224 may be located on the rear surface of the main body 200, but may be located on the side surface of the main body 200 according to various embodiments of the present disclosure. A blocking part 274 for a waterproofing function may be located on the battery cover part 270. The blocking part 274 may block an inflow of liquid such as water in a state where the battery cover part 270 is connected to the main body 200.

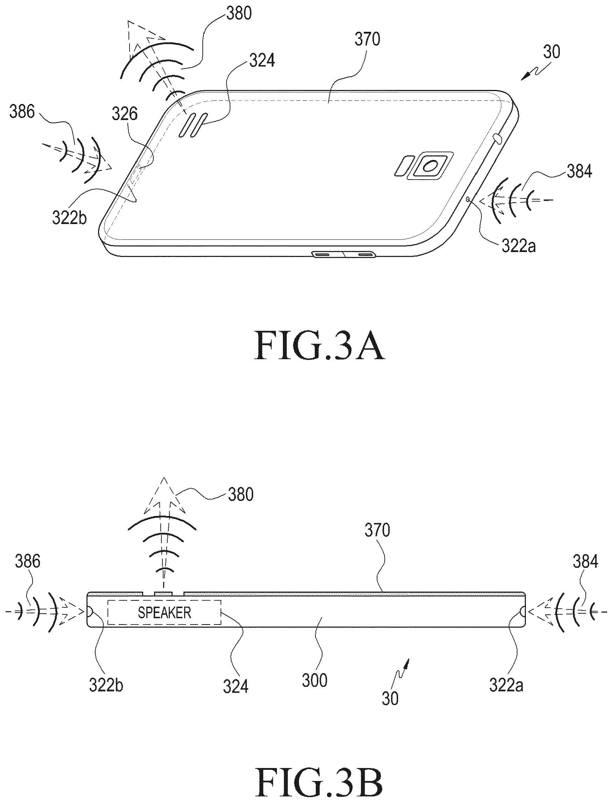

FIGs. 3A and 3B illustrate an example of a function or operation in which an electronic device 30 outputs a first signal 380 and receives second signals 384 and 386 when a battery cover part of the electronic device 30 completely covers a main body according to various embodiments of the present disclosure.

Referring to FIGs. 3A and 3B, the electronic device 30 according to various embodiments of the present disclosure may output the first signal 380 through a speaker 324. The output of the first signal may be controlled by, for example, the output control module 214. According to various embodiments of the present disclosure, when the event detection module 212 detects the generation of at least one event corresponding to a case where the electronic device 30 is booted/rebooted, the memory card (for example, the SIM card) is inserted into or removed from the socket 224 located on the rear surface of the electronic device 30 as illustrated in FIG. 2D, a terminal of an external device (for example, a charging terminal) is connected to the connector 223, and a voice content output request of the electronic device 30 is received from the user, the output control module 214 may make a control to output the first signal 380.

The output control module 214 may make a control to output the first signal 380 (for example, a sound wave) having a predetermined frequency (for example, 10 KHz and 6 KHz) according to a change in amplitude, phase and/or frequency of the first signal 380. That is, according to various embodiments of the present disclosure, the output first signal 380 may include a two tone signal having different frequencies. The first signal 380 may be output through a signal output module (for example, the speaker 324). The predetermined frequencies 10 KHz and 6 KHz are only examples for the description the present disclosure, and the frequencies may be variously modified and implemented. According to various embodiments of the present disclosure, the predetermined frequencies may include a non-audible frequency. Further, the two tone signal is only an example, and the first signal 380 may include a one tone signal according to various embodiments of the present disclosure.

The electronic device 30 may receive the second signal 384 or 386 corresponding to the first signal 380 output from the speaker 324. The second signals 384 and 386 may be received by, for example, signal receivers (for example, microphones 322a and 322b) included in the electronic device 30, respectively. In the present disclosure, for the convenience of the present disclosure, the second signals (that is, the "signal 384" and the "signal 386") received by the microphones 322a and 322b will be distinguished from each other.

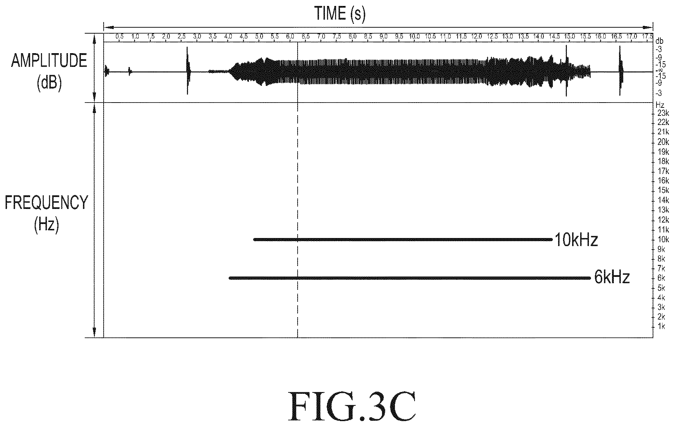

FIG. 3C illustrates an example of the second signals 384 and 386 received when the battery cover part 370 of the electronic device completely covers the main body 300 according to various embodiments of the present disclosure.

Referring to FIG. 3C, when the battery cover part 370 of the electronic device 30 completely covers the main body 300 according to various embodiments of the present disclosure, the microphones 332a and 332b may receive the second signals 384 and 386 having physical quantities as illustrated in FIG. 3C for a predetermined time. The second signals 384 and 386 illustrated in FIG. 3C may be the same as a physical quantity for attributes of a first reference signal (for example, the first signal) preset to the electronic device 30 (the term "physical quantity for the attributes of the first reference signal" may be abbreviated to a "first reference signal" or a "physical quantity of the first reference signal" as necessary in the present disclosure), or may be a signal, which can be determined as being the same as the first reference signal although the second signal is not exactly the same as the first reference signal. In the present disclosure, the term "signal which can be determined as being the same as the first reference signal (or the first signal)" may be interchanged with various terms such as "a first distorted signal", "a signal similar to the first reference signal (or the first signal), and the like. Further, the term "first reference signal" may refer to a reference signal pre-stored in the electronic device 30 to determine whether the battery cover part 380 is normally coupled to the main body 300. According to various embodiments of the present disclosure, the first reference signal may be the same as or different from the first signal 380. For example, the first reference signal may be a signal having the physical quantity as illustrated in FIG. 3C. When the second signals 384 and 386 received by the microphones 322a and 322b, respectively, are, for example, signals having the physical quantities illustrated in FIG. 3C, the first reference signal and the second signals 384 and 386 have the same physical quantities, so that the coupling determiner 216 of the electronic device 30 may determine that the battery cover part 370 completely covers the main body 300 of the electronic device 30. The electronic device 30 may determine whether the received second signals 384 and 386 correspond to the first distorted signal according to at least one of, for example, whether the received second signals 384 and 386 include multiple frequencies, the number of multiple frequencies included in the received second signals 384 and 386, a value of the multiple frequencies, and a size (in other words, intensity) of amplitude of the received second signals 384 and 386. Such functions or operations may be performed by, for example, the coupling determination module 216. The coupling determination module 216 may determine whether the received the second signals 384 and 386 correspond to the first distorted signal based on whether each of the elements (whether the multiple frequencies are included, the number of multiple frequencies, the value of the multiple frequencies, and the size of the amplitude) for determining whether the second signals 384 and 386 received by the electronic device 30 correspond to the first distorted signal is within a predetermined threshold (in other words, a boundary value).

In the present disclosure, as necessary, a case where the first signal 380 is output through the speaker 354 may be referred to as a "normal path", and a case where the first signal 380 is output through an incompletely covered part (for example, an incompletely coupled portion 490) may be referred to as a "leak path" or an "abnormal path".

Although it has been described that the number of microphones 322a and 322b included in the electronic device 30 according to various embodiments of the present disclosure is two in FIGs. 3A to 3C, it is only an example for the description of the present disclosure. According to various embodiments of the present disclosure, the number of microphones 322a and 322b may be variously modified and manufactured during a manufacturing process of the electronic device 30.

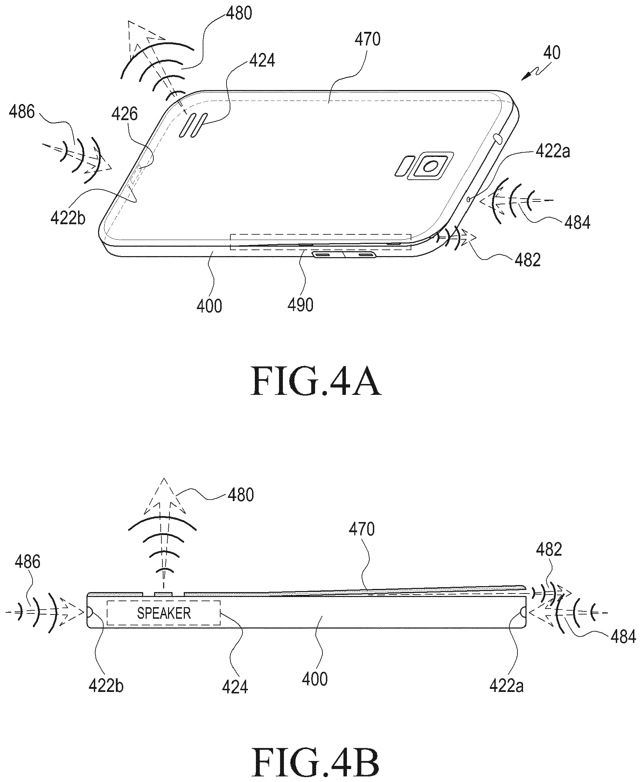

FIGs. 4A to 4F illustrate an example of a function or operation in which an electronic device 40 outputs a first signal 480 and receives second signals 484 and 486 when a battery cover part 470 of the electronic device 40 incompletely covers a main body 400 according to various embodiments of the present disclosure.

Referring to FIGs. 4A to 4F, when the first signal 480 is output in a state where the main body 400 of the electronic device 40 is incompletely coupled to the battery cover part 470, the first signal 480 output from the signal output module (for example, the speaker 424) may be output through a leak path 482 such as an incompletely coupled portion 490. Due to the first signal 480 output through the leak path 482, the first signal 480 output through the normal path may be distorted. The electronic device 40 may receive the signal distorted from the first signal 480, which is output from the electronic device 40, as the second signal 484 or 486. When the distorted signal is received as the second signal 484 or 486, the coupling determination module 216 may determine that the battery cover part 470 is incompletely coupled. A detailed description thereof will be made below.

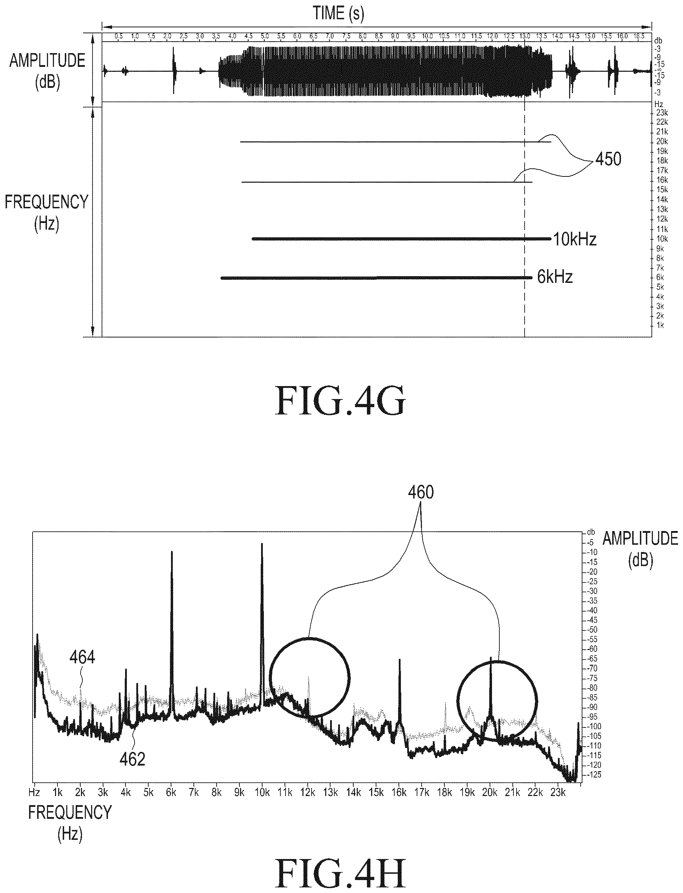

FIG. 4G illustrates an example of attributes of the second signals 484 and 486 received when the battery cover part 470 of the electronic device 40 incompletely covers the main body 400 according to various embodiments of the present disclosure. FIG. 4H illustrates an example of a difference between the second signals 484 and 486 received when the battery cover part 470 of the electronic device 40 completely covers the main body 400 and the second signals 484 and 486 received when the battery cover part 470 incompletely covers the main body 400 as illustrated in FIG. 4A .

Referring to FIG. 4G, when the leak path 482 exists, the first signal 480 may have distortion like a non-linear change in a signal and/or a change in amplitude of a signal such as the generation of multiple frequencies 450 of the output first signal 480. FIG. 4G illustrates an example of a third distorted signal, which is relatively more distorted from the first signal compared to the second distorted signal due to the leak path 482. The second distorted signal and the third distorted signal will be described below.

FIG. 4H illustrates an example of a normal coupling signal 462, which is determined as having no distortion of the first signal 480 through a normal coupling of the battery cover part 470, and an abnormal coupling signal 464 having the generation of the distortion due to the leak path 482. FIG. 4H illustrates the normal coupling signal 462 (for example, the signal illustrated in FIG. 3C) and the third distorted signal (for example, the second signal 484 of FIG. 4B) as the abnormal coupling signal 464 for the convenience of the description of the present disclosure. Referring to FIG. 4H, there may be a difference 460 between amplitudes according to frequencies of the normal coupling signal 462 and the abnormal coupling signal 464 received by the electronic device 40 in cases where the leak path 482 exists and where the leak path 482 does not exist. The electronic device 40 may determine a coupling state of the battery cover part 470 with respect to the main body 400 based on a difference between physical quantities of various signals 462 and 464 as illustrated in FIG. 4H.

Hereinafter, the embodiments illustrated in FIGs. 4A to 4F will be described in more detail. FIGs. 4A and 4B illustrate a state where, on the upper part of the electronic device 40, the main body 400 of the electronic device 40 is incompletely coupled to the battery cover part 470. As illustrated in FIGs. 4A and 4B, when the incompletely coupled portion 490 exists on the upper part of the electronic device 40, the leak path 482 may be formed along the incompletely coupled portion 490. Accordingly, the second signal 484 received by the microphone 422a located on the upper part of the electronic device 40 may be a signal more seriously (in other word, more significantly) distorted than the second signal 486 received by the microphone 422b located on the lower part of the electronic device 40. In this case, a processor (for example, the coupling determination module 216) of the electronic device 40 may determine that the incompletely coupled portion 490 exists on the upper part of the electronic device 40.

In the present disclosure, a signal, which is not determined as being the same as or being similar to the signal received by the microphone 422b, that is, the first reference signal (or the first signal 480) and has relatively smaller distortion according to the leak path 482 than the third distorted signal, may be referred to as the second distorted signal. Further, in the present disclosure, a signal, which is not determined as being the same as or being similar to the signal received by the microphone 422a, that is, the first reference signal (or the first signal 480) and has relatively larger distortion according to the leak path 482 than the second distorted signal, may be referred to as the third distorted signal.

The electronic device 40 may determine whether the received second signals 484 and 486 correspond to the second distorted signal or the third distorted signal according to at least one of, for example, whether the received second signals 484 and 486 include multiple frequencies, the number of multiple frequencies included in the received second signals 484 and 486, a value of the multiple frequencies, and a size (in other words, intensity) of amplitude of the received second signals 484 and 486. Such functions or operations may be performed by, for example, the coupling determination module 216. The coupling determination module 216 may determine whether the received second signals 484 and 486 correspond to the second distorted signal or the third distorted signal based on whether each of the elements (whether the multiple frequencies are included, the number of multiple frequencies, the value of the multiple frequencies, and the size of the amplitude) for determining whether the second signals 484 and 486 received by the electronic device 40 correspond to the second distorted signal or the third distorted signal is within a predetermined threshold (in other words, a boundary value).

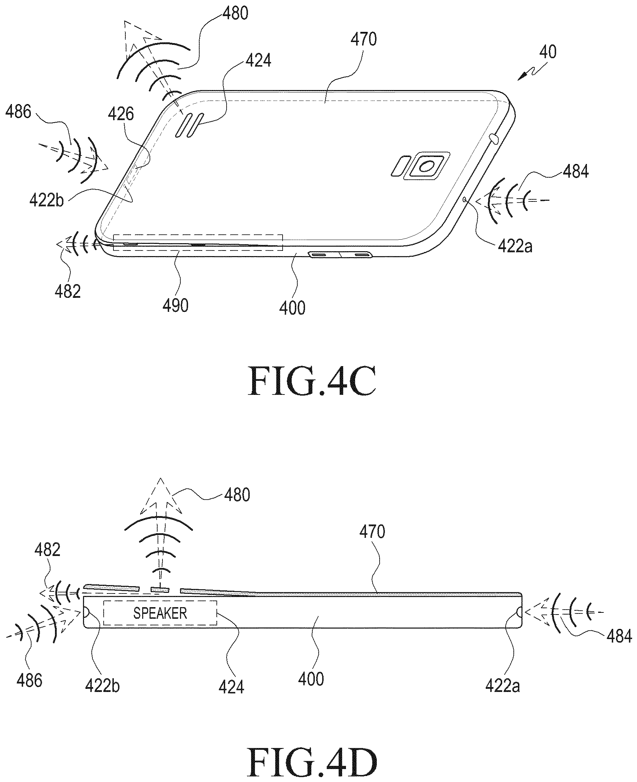

FIGs. 4C and 4D illustrate a state where, on the lower part of the electronic device 40, the main body 400 of the electronic device 40 is incompletely coupled to the battery cover part 470. As illustrated in FIGs. 4C and 4D, when the incompletely coupled portion 490 exists on the lower part of the electronic device 40, the leak path 482 may be formed along the incompletely coupled portion 490. Accordingly, the microphone 422b located on the lower part of the electronic device 40 may receive the third distorted signal and the microphone 422a located on the lower part of the electronic device 40 may receive the second distorted signal. In this case, a processor (for example, the coupling determination module 216) of the electronic device 40 may determine that the incompletely coupled portion 490 exists on the lower part of the electronic device 40.

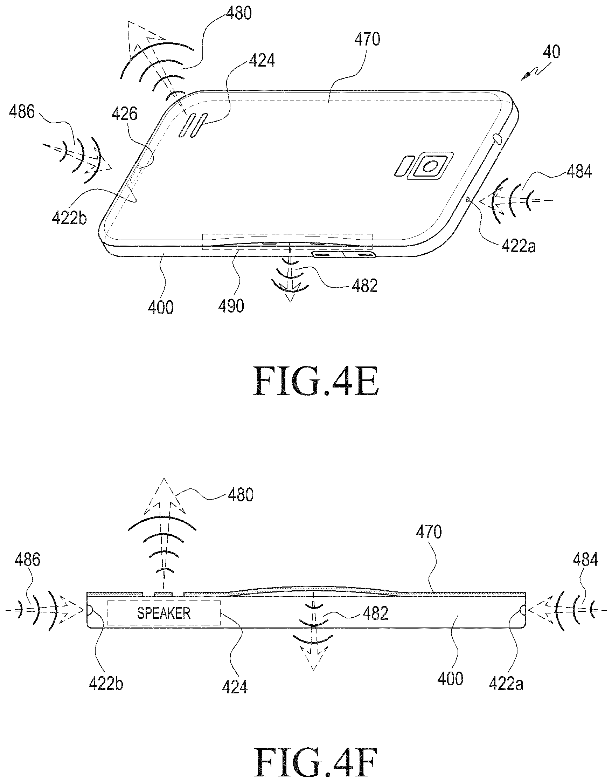

FIGs. 4E and 4F illustrate a state where, on the middle part of the electronic device 40, the main body 400 of the electronic device 40 is incompletely coupled to the battery cover part 470. According to various embodiments of the present disclosure, when the middle part of the electronic device 40 is incompletely coupled as illustrated in FIGs. 4E and 4F, the second distorted signal may be received by the microphones 422a and 422b as the second signals 484 and 486. In this case, a processor (for example, the coupling determination module 216) of the electronic device 40 may determine that the incompletely coupled portion 490 exists on the middle part of the electronic device 40.

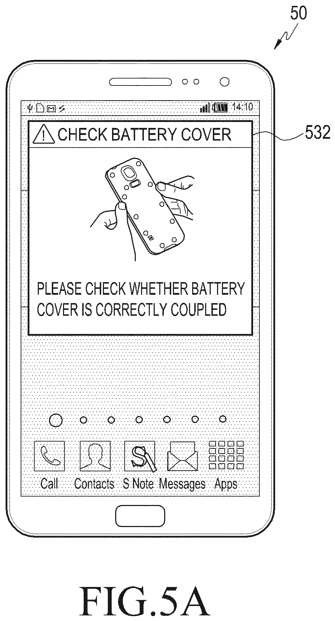

According to various embodiments of the present disclosure, a lookup table, which defines, based on a detailed location of the incompletely coupled portion 490 (for example, the three parts "upper part", "lower part", and "middle part"), a correlation between the detailed location and physical quantities of the second signals 484 and 486 corresponding to the detailed location, may be pre-stored in the electronic device 40. When the second signals 484 and 486 are received, the coupling determination module 216 may determine the detailed location corresponding to the physical quantities, which are the same as or closest to the physical quantities of the received second signals 484 and 486, in the lookup table pre-stored in the electronic device 40 as the location where the incompletely coupled portion 490 exists. FIGs. 5A to 5C illustrate embodiments of outputting a notification message 532 according to a location where a battery cover part (for example, the battery cover part 470) incompletely covers an electronic device 50 according to various embodiments of the present disclosure. FIGs. 5A to 5C illustrate embodiments of displaying the notification message 532 on the electronic device 50 as the embodiments of outputting the notification message 532 for the description of the present disclosure.

Referring to FIG. 5A, when a portion where the battery cover part is incompletely coupled (for example, the incompletely coupled portion 490) exists, the electronic device 50 may provide the user with the notification message 532 informing of the incomplete coupling of the battery cover part. The provision of the notification message 532 may be controlled by, for example, the output control module 212. When the coupling determination module 216 determines that the incompletely coupled part is located on the upper part of the electronic device 50, the output control module 212 may make a control to display the notification message 532 on the upper part of a display module (for example, the touch screen 230) to correspond to the incompletely coupled portion. Through such a function or operation, the user can intuitively recognize that the incompletely coupled portion (for example, the incompletely coupled portion 490) is located on the upper part of the electronic device 50.

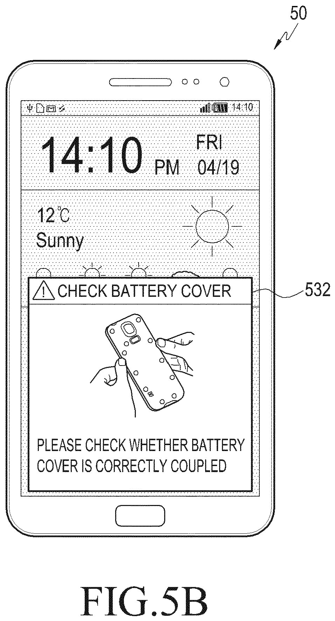

Referring to FIG. 5B, when a portion where the battery cover part is incompletely coupled (for example, the incompletely coupled portion 490) exists, the electronic device 50 may provide the user with the notification message 532 informing of the incomplete coupling of the battery cover part. When the coupling determination module 216 determines that the incompletely coupled part is located on the lower part of the electronic device 50, the output control module 212 may make a control to display the notification message 532 on the lower part of the display module to correspond to the incompletely coupled portion. Through such a function or operation, the user can intuitively recognize that the incompletely coupled portion (for example, the incompletely coupled portion 490) is located on the lower part of the electronic device 50.

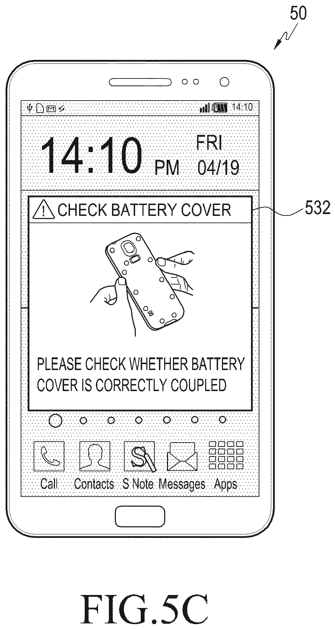

Referring to FIG. 5C, when a portion where the battery cover part is incompletely coupled (for example, the incompletely coupled portion 490) exists, the electronic device 50 may provide the user with the notification message 532 informing of the incomplete coupling of the battery cover part. When the coupling determination module 216 determines that the incompletely coupled part is located on the middle part of the electronic device 50, the output control module 212 may make a control to display the notification message 532 on the middle part of the display module to correspond to the incompletely coupled portion. Through such a function or operation, the user can intuitively recognize that the incompletely coupled portion (for example, the incompletely coupled portion 490) is located on the middle part of the electronic device 50.

FIGs. 5A to 5C illustrate embodiments of displaying the notification message 532 on the electronic device 50 as the embodiments of providing the user with the notification message 532. However, according to various embodiments of the present disclosure, the notification message 532 may be provided to the user in various methods such as provision of auditory information related to the incomplete coupling (for example, outputting a voice message informing of the location of the incomplete coupling) or provision of tactile information related to the incomplete coupling (for example, outputting a vibration through the vibration motor 225) as well as provision of visual information by displaying the notification message 532.

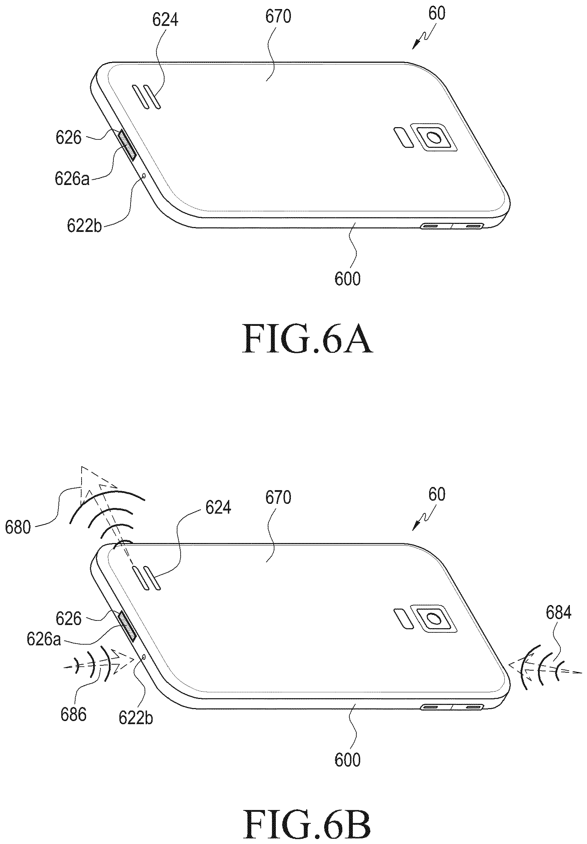

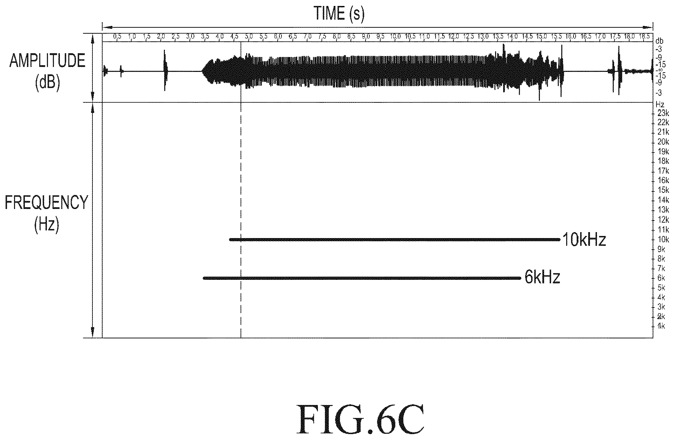

FIGs. 6A and 6B illustrate an example of a function or operation in which an electronic device 60 outputs a first signal and receives second signals when a connector cover part of the electronic device 60 completely covers a connector according to various embodiments of the present disclosure. FIG. 6C illustrates an example of the received second signals 684 and 686 when the connector cover part 626a of the electronic device 60 completely covers the connector according to various embodiments of the present disclosure.

FIG. 6A may illustrate a state in which the connector cover part 626a completely covers the connector 626 after a terminal (for example, a terminal of a charger for charging the battery of the electronic device 60) of the external device connected to the connector 626 is removed. When the generation of an event such as the removal of the terminal of the charger is detected, the electronic device 60 may output a first signal 680 for determining whether the connector cover part 626a completely covers the connector 626 through a signal output module (for example, a speaker 624) as illustrated in FIG. 6B. The first signal 680 for determining whether the connector cover part 626a completely covers the connector 626 may be a signal, which is the same as or different from the first signal (for example, the first signal 280) for determining whether the battery cover part 270 completely covers the electronic device 20. The electronic device 60 may receive the second signals 684 and 686 corresponding to the output first signal 680 through the signal reception module (for example, microphones 622a and 622b) as illustrated in FIG. 6C. A function or operation for detecting the generation of the event may be performed by, for example, the event detector 212. The first signal 680 may include a two tone signal or include a one tone signal as described above. When the second signals 684 and 686 having physical quantities illustrated in FIG. 6C are received, the electronic device 60 may determine that the connector cover part 626a completely covers the connector 626 and such a function or operation may be performed by, for example, the coupling determination module 216. The second signals 684 and 686 having the physical quantities as illustrated in FIG. 6C may be signals, which are the same as or similar to a second reference signal pre-stored in the electronic device 60 to determine a normal coupling state of the connector cover part 626a. According to various embodiments of the present disclosure, the second reference signal may be a signal, which is the same as or different from the first reference signal. Further, the second reference signal may be a signal, which is the same as or different from the first signal 680. In the present disclosure, the term "second reference signal" may refer to a signal pre-stored in the electronic device 60 to determine whether the connector cover part 626a is normally coupled to the connector 626. Further, in the present disclosure, the term "signal similar to the second reference signal" may be referred to as a "fourth distorted signal of the second reference signal". In the present disclosure, the "fourth distorted signal" may correspond to the "first distorted signal", and the "first distorted signal" and the "fourth distorted signal" may be the same as or different from each other. That is, in the present disclosure, when it is determined that both second signals 684 and 686 received in accordance with the output first signal 680 are signals (that is, the "fourth distorted signal"), which are the same as or similar to the second reference signal, the electronic device 60 may determine that the connector cover part 626a completely covers the connector 626. In the present disclosure, the term "physical quantity for attributes of the second reference signal" may be abbreviated to the "second reference signal" or the "physical quantity of the second reference signal".

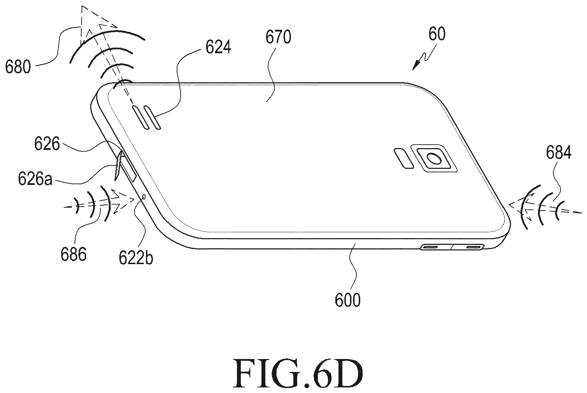

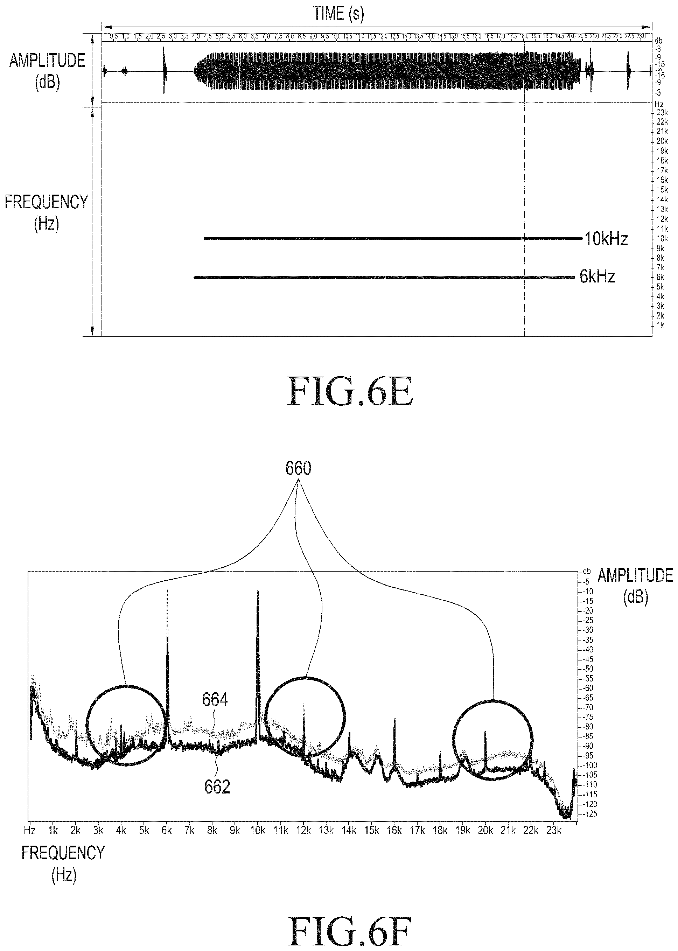

FIG. 6D illustrates an example of a function or operation in which the electronic device 60 outputs the first signal 680 and receives the second signals 684 and 686 when the connector cover part 626a of the electronic device 60 incompletely covers the connector 626 according to various embodiments of the present disclosure. FIG. 6E illustrates an example of attributes of at least one of the received second signals 684 and 686 when the connector cover part 626a of the electronic device 60 incompletely covers the connector 626 according to various embodiments of the present disclosure. FIG. 6D illustrates a state where the connector cover part 626a incompletely covers the connector 626 after the terminal of the external device connected to the connector 626 is removed. When the generation of an event such as the removal of the terminal of the charger is detected, the electronic device 60 may output the first signal 680 for determining whether the connector cover part 626a completely covers the connector 626 through the speaker 624 as illustrated in FIG. 6D. Further, the electronic device 60 may receive the second signals 684 and 686 corresponding to the output first signal 680 as illustrated in FIG. 6E through the microphones 622a and 622b. As illustrated in FIG. 6D, when the connector 626 and/or the connector cover part 626a are located on the lower part of the electronic device 60, the lower microphone 622b may receive a sixth distorted signal and the upper microphone 622a may receive a fifth distorted signal. The "fifth distorted signal" and the "sixth distorted signal" are the terms corresponding to the "second distorted signal" and the "third distorted signal", and the description of the "second distorted signal" and the "third distorted signal" may be equally applied to the "fifth distorted signal" and the "sixth distorted signal" in connection with the connector 626 and/or the connector cover part 626a. FIG. 6E illustrates an example of the sixth distorted signal received by the lower microphone 622b in the state of FIG. 6D. According to various embodiments of the present disclosure, when the sixth distorted signal is received by the lower microphone 622b and the fifth distorted signal is received by the upper microphone 622a, a processor (for example, the coupling determination module 216) of the electronic device 60 may determine that the connector cover part 626a located on the lower part of the electronic device 60 is incompletely coupled.

FIG. 6F illustrates an example of a normal coupling signal 662 received when the connector cover part 626a of the electronic device 60 completely covers the connector 262 and an abnormal coupling signal 664 received when the connector cover part 626a of the electronic device 60 incompletely covers the connector 262 according to various embodiments of the present disclosure.

Referring to FIG. 6F, there may be a difference 660 between amplitudes according to frequencies of the normal coupling signal 662 and the abnormal coupling signal 664 received by the electronic device 60 in cases where the connector cover part 626a completely covers and incompletely covers the connector 626. The normal coupling signal 662 may be, for example, the signal illustrated in FIG. 6C, and the abnormal coupling signal 664 may be, for example, the signal illustrated in FIG. 6E. The electronic device 60 may determine a coupling state of the connector cover part 626a with respect to the connector 626 based on a difference between physical quantities of normal coupling signal 662 and the abnormal coupling signal 664 as illustrated in FIG. 6F.

According to various embodiments of the present disclosure, the electronic device 60 may pre-store a lookup table, which defines a correlation between a location of the incompletely coupled connector cover part 626a (for example, the "upper part", "lower part", "left part", and/or "right part" of the electronic device 60) and the physical quantities of the second signals 684 and 686 predetermined (or premeasured) according to the location of the incompletely coupled connector cover part 262a when the connector cover part 626a incompletely covers the connector 626. When the second signals 684 and 686 are received according to the output of the first signal 680, the coupling determination module 216 may determine the physical quantity of each of the second signals 684 and 686 and determine the location of the incompletely coupled cover part 626a according to the correlation defined in the lookup table.

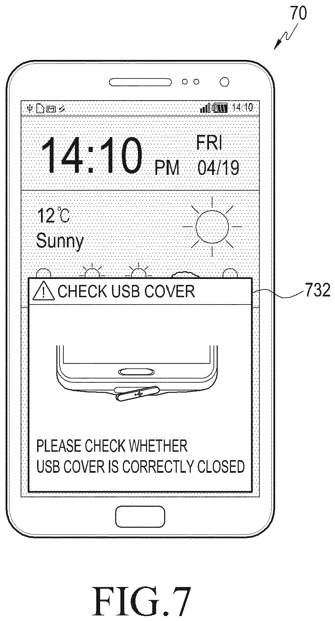

FIG. 7 illustrates an embodiment of displaying a notification message 732 based on a location of a connector cover part (for example, the connector cover part 626a) of an electronic device 70, which is incompletely covered, according to various embodiments of the present disclosure.

Referring to FIG. 7, when the connector cover part 626a incompletely covers the connector 626 as illustrated in FIG. 6D, the electronic device 70 may provide the user with the notification message 732 informing of the incomplete covering of the connector cover part 626a. FIG. 7 illustrates embodiments of displaying the notification message 732 on the electronic device 70 as the embodiments of providing the notification message 732 for the description of the present disclosure. The provision of the notification message 732 may be controlled by, for example, the output control module 212. When the connector cover part 626a incompletely covers the connector 626, the output control module 212 may make a control to display the notification message 732 on the lower part of a display module (for example, the touch screen 230) to correspond to a location of the connector cover part 626a (for example, when the connector 626 and the connector cover part 626a are located on the lower part of the electronic device 70). Through such a function or operation, the user can intuitively recognize that the connector cover part 626a located on the lower part of the electronic device 70 is incompletely coupled.

FIG. 7 illustrates embodiments of displaying the notification message 732 on the electronic device 70 as the embodiments of providing the user with the notification message 732. However, according to various embodiments of the present disclosure, the notification message 732 may be provided to the user through auditory information and/or tactile information as described above.

According to various embodiments of the present disclosure, a socket (for example, the socket 224) may be located on the side surface (S) of the electronic device (for example, the electronic device 20). In this case, a socket cover part for covering the socket may be also located, and the description of FIGs. 6A to 7 may be equally applied to the socket cover part.

In the present disclosure, for the convenience of the present disclosure, the battery cover part (for example, the battery cover part 270), the connector cover part (for example, the connector cover part 226a), and the socket cover (not shown) may be collectively referred to as the term "cover part".

According to various embodiments of the present disclosure, the event detection module (for example, the event detection module 212) for detecting the generation of an event related to the coupling of the cover part with respect to the electronic device (for example, the electronic device 20) may be further included.

According to various embodiments of the present disclosure, the event may include at least one of the booting of the electronic device 20, the insertion of the memory into the socket included in the electronic device 20, and the insertion or separation of the terminal of the external device into or from the connector (for example, the connector 226) included in the electronic device 20.

According to various embodiments of the present disclosure, the first signal and/or the second signal may include a sound wave.

According to various embodiments of the present disclosure, the first signal may be output through the speaker included in the electronic device.

According to various embodiments of the present disclosure, the attribute of the first signal and/or the second signal may include amplitude, phase, or frequency.

According to various embodiments of the present disclosure, the electronic device 20 may include a plurality of microphones (for example, the microphone 221) for receiving the output first signal.

According to various embodiments of the present disclosure, the output controller 212 may output a notification message related to the coupling of the cover part based on a location of the incompletely coupled portion determined according to the attribute of the second signal received by the plurality of microphones 221.

According to various embodiments of the present disclosure, when an output request of the sound by the speaker 222 is received, the output control module 212 may output the first signal together with the output of the sound.

According to various embodiments of the present disclosure, the electronic device (for example, the electronic device 20) may include one signal reception module (for example, the microphone 221). In this case, in order to perform the functions or operations described in FIGs. 3A to 7, the storage (for example, the storage 240) of the electronic device 20 may pre-store information on various amplitudes, phases, and/or frequencies of the second signal (for example, the second signal 384) according to the location of the incompletely coupled portion. When the second signal is received, the coupling determination module 216 may determine the location of the incompletely coupled portion by comparing the attribute of the received second signal with the pre-stored information on the second signal.

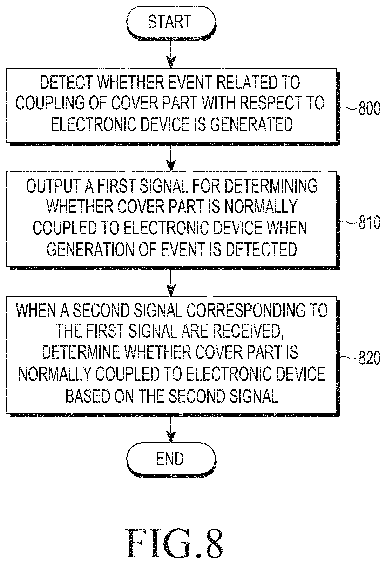

FIG. 8 is a flowchart illustrating an a method of operating the electronic device according to various embodiments of the present disclosure.

Referring to FIG. 8, the method of operating the electronic device according to various embodiments of the present disclosure may include an operation 800 of detecting an event related to a coupling of the cover part with respect to the electronic device (for example, the electronic device 20). The method of operating the electronic device according to various embodiments of the present disclosure may include an operation 810 of, when the event is detected, outputting the first signal (for example, the first signal 380) for determining whether the cover part is normally coupled to the electronic device. The method of operating the electronic device according to various embodiments of the present disclosure may include an operation 820 of, when the second signals (for example, the second signals 384 and 386) corresponding to the output first signal are received, determining whether the cover part is normally coupled to the electronic device based on the attribute of the received second signal.

According to various embodiments of the present disclosure, the method of operating the electronic device may further include an operation of detecting the generation of the event related to the coupling of the cover part with respect to the electronic device.

According to various embodiments of the present disclosure, the event may include at least one of the booting of the electronic device, the insertion or removal of the external memory into or from the socket (for example, the socket 224) included in the electronic device, the insertion or separation of the terminal into or from the connector (for example, the connector 223) included in the electronic device, and a voice content output request of the electronic device.

According to various embodiments of the present disclosure, the first signal and/or the second signal may include a sound wave.

According to various embodiments of the present disclosure, the cover part may include at least one of the battery cover (for example, the battery cover 270), the connector cover (for example, the connector cover 226a), and the socket cover.

According to various embodiments of the present disclosure, the first signal may be output through the speaker included in the electronic device.

According to various embodiments of the present disclosure, the attribute of the signal may include amplitude, phase, or frequency of the signal.

The method of operating the electronic device according to various embodiments of the present disclosure may further include an operation of receiving the signal output by a plurality of microphones (for example, the microphone 221) included in the electronic device.

The method of operating the electronic device according to various embodiments of the present disclosure may further include an operation of outputting a notification message (for example, the notification message 532) related to the coupling of the cover part based on a location of the incompletely coupled portion determined according to the attribute of the second signal received by the plurality of microphones.

Further, the description of the electronic device according to various embodiments of the present disclosure may be equally applied to the method of operating the electronic device according to various embodiments of the present disclosure.

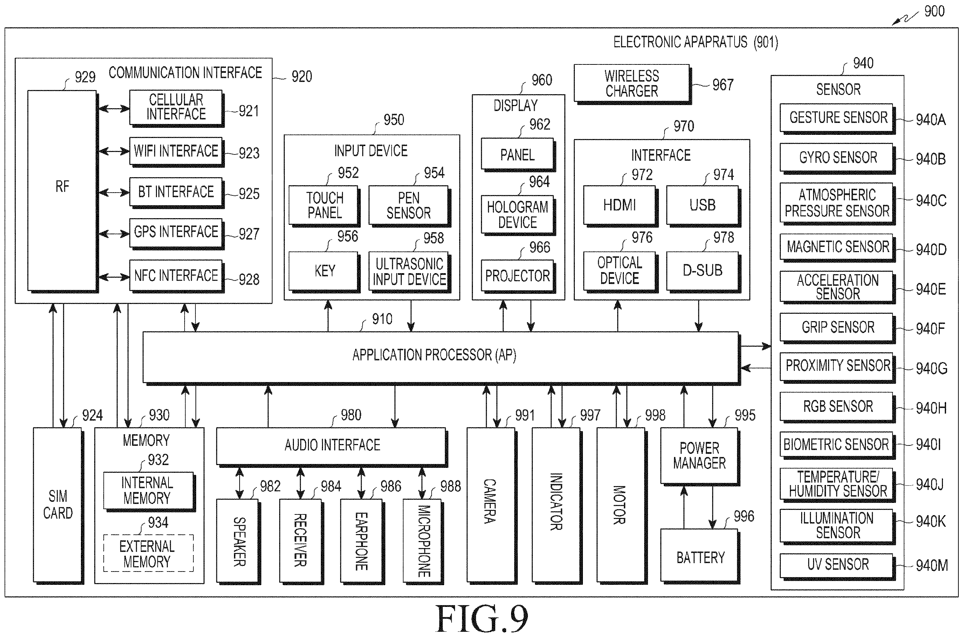

FIG. 9 is a block diagram of an electronic device according to various embodiments of the present disclosure.

Referring to FIG. 9, an electronic device 901 may include, for example, all or some of the electronic device 101 illustrated in FIG. 1. The electronic device 901 may include one or more Application Processors (APs) 910, a communication interface 920, a Subscriber Identifier Module (SIM) card 924, a memory 930, a sensor 940, an input device 950, a display 960, an interface 970, an audio interface 980, a camera 991, a power manager 995, a battery 996, an indicator 997, and a motor 998.

The AP 910 may control a plurality of hardware or software components connected thereto by driving an operating system or an application program and perform a variety of data processing and calculations. The AP 910 may be embodied as, for example, a System on Chip (SoC). According to an embodiment of the present disclosure, the AP 910 may further include a Graphical Processing Unit (GPU) and/or an image signal processor. The AP 910 may also include at least some (for example, a cellular interface 921) of the components illustrated in FIG. 9. The AP 910 may load instructions or data, received from at least one other component (for example, a non-volatile memory), in a volatile memory to process the loaded instructions or data, and may store various types of data in a non-volatile memory.

The communication interface 920 may have a configuration equal or similar to the communication interface 160 of FIG. 1. The communication interface 920 may include, for example, a cellular interface 921, a Wi-Fi interface 923, a BT interface 925, a GPS interface 927, an NFC interface 928, and a Radio Frequency (RF) module 929.

The cellular interface 921 may provide a voice call, a video call, text message services, or Internet services through, for example, a communication network. According to an embodiment, the cellular interface 921 may distinguish between and authenticate electronic devices 901 within a communication network using a subscriber identification module (for example, the SIM card 924). According to an embodiment, the cellular interface 921 may perform at least some of the functions which may be provided by the AP 910. According to an embodiment, the cellular interface 921 may include a Communication Processor (CP).

The Wi-Fi interface 923, the BT interface 925, the GPS interface 927, and the NFC interface 928 may include, for example, a processor for processing data transmitted/received through the corresponding module. According to some embodiments, at least some (two or more) of the cellular interface 921, the Wi-Fi interface 923, the BT interface 925, the GPS interface 927, and the NFC interface 928 may be included in one Integrated Chip (IC) or IC package.

The RF 929 may transmit/receive, for example, a communication signal (for example, an RF signal). The RF 929 may include, for example, a transceiver, a Power Amp Module (PAM), a frequency filter, a Low Noise Amplifier (LNA), or an antenna. According to another embodiment, at least one of the cellular interface 921, the Wi-Fi interface 923, the BT interface 925, the GPS interface 927, and the NFC interface 928 may transmit/receive an RF signal through a separate RF.

The SIM card 924 may include a card including a subscriber identification module and/or an embedded SIM, and contain unique identification information (for example, an Integrated Circuit Card Identifier (ICCID)) or subscriber information (for example, an International Mobile Subscriber Identity (IMSI)).

The memory (for example, the memory 930) may include, for example, an internal memory 932 or an external memory 934. The internal memory 932 may include at least one of, for example, a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard driver, or a Solid State Drive (SSD).

The external memory 934 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 934 may be functionally and/or physically connected to the electronic device 901 through various interfaces.

The sensor 940 may measure, for example, a physical quantity or detect an operation state of the electronic device 901, and may convert the measured or detected information to an electrical signal. The sensor 940 may include, for example, at least one of a gesture sensor 940A, a gyro sensor 940B, an atmospheric pressure sensor 940C, a magnetic sensor 940D, an acceleration sensor 940E, a grip sensor 940F, a proximity sensor 940G, a color sensor 940H (for example, red, green, and blue (RGB) sensor), a biometric sensor 940I, a temperature/humidity sensor 940J, an illumination sensor 940K, and an Ultra Violet (UV) sensor 940M. Additionally or alternatively, the sensor 940 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor 940 may further include a control circuit for controlling at least one sensor included therein. According to some embodiments, the electronic device 901 may further include a processor configured to control the sensor 940 as a part of or separately from the AP 910, and may control the sensor 940 while the AP 910 is in a sleep state.

The input device 950 may include, for example, a touch panel 952, a (digital) pen sensor 954, a key 956, or an ultrasonic input device 958. The touch panel 952 may use at least one of, for example, a capacitive type, a resistive type, an infrared type, and an ultrasonic type. The touch panel 952 may further include a control circuit. The touch panel 952 may further include a tactile layer, and provide a tactile reaction to a user.

The (digital) pen sensor 954 may include, for example, a recognition sheet which is a part of the touch panel or a separate recognition sheet. The key 956 may include, for example, a physical button, an optical key or a keypad. The ultrasonic input device 958 may input data through an input means that generates an ultrasonic signal, and the electronic device 901 may identify data by detecting a sound wave with a microphone (for example, a microphone 988).

The display 960 (for example, the display 160) may include a panel 962, a hologram device 964 or a projector 966. The panel 962 may include a configuration that is identical or similar to the display 160 illustrated in FIG. 1. The panel 962 may be embodied to be, for example, flexible, transparent, or wearable. The panel 962 may also be configured to be integrated with the touch panel 952 as a single module. The hologram device 964 may show a stereoscopic image in the air by using interference of light. The projector 966 may project light onto a screen to display an image. For example, the screen may be located inside or outside the electronic device 901. According to an embodiment, the display 960 may further include a control circuit for controlling the panel 962, the hologram device 964, or the projector 966.

The interface 970 may include, for example, a High-Definition Multimedia Interface (HDMI) 972, a Universal Serial Bus (USB) 974, an optical interface 976, or a D-subminiature (D-sub) 978. The interface 970 may be included in, for example, the communication interface 170 illustrated in FIG. 1. Additionally or alternatively, the interface 970 may include, for example, a Mobile High-definition Link (MHL) interface, a Secure Digital (SD) card/Multi-Media Card (MMC) interface, or an Infrared Data Association (IrDA) standard interface.

The audio interface 980 may bilaterally convert, for example, a sound and an electrical signal. At least some components of the audio interface 980 may be included in, for example, the input/output interface 150 illustrated in FIG. 1. The audio interface 980 may process sound information input or output through, for example, a speaker 982, a receiver 984, earphones 986, the microphone 988, or the like.

The camera 991 is a device which may photograph a still image and a dynamic image. According to an embodiment, the camera 291 may include one or more image sensors (for example, a front sensor or a back sensor), a lens, an Image Signal Processor (ISP) or a flash (for example, LED or xenon lamp).

The power manager 995 may manage, for example, power of the electronic device 901. According to an embodiment, the power manager 995 may include a Power Management Integrated Circuit (PMIC), a charger Integrated Circuit (IC), or a battery or fuel gauge. The PMIC may have a wired and/or wireless charging scheme. Examples of the wireless charging method may include, for example, a magnetic resonance method, a magnetic induction method, an electromagnetic method, and the like. Additional circuits (for example, a coil loop, a resonance circuit, a rectifier, etc.) for wireless charging may be further included. The battery gauge may measure, for example, the remaining amount of a battery 996, a charging voltage and current, or temperature. The battery 996 may include, for example, a rechargeable battery and/or a solar battery.

The indicator 997 may indicate a particular status of the electronic device 901 or a part thereof (for example, the AP 910), for example, a booting status, a message status, a charging status, or the like. The motor 998 may convert an electrical signal into mechanical vibrations, and may generate a vibration or haptic effect. Although not illustrated, the electronic device 901 may include a processing device (for example, a GPU) for supporting mobile TV. The processing device for supporting mobile TV may process media data according to a standard of Digital Multimedia Broadcasting (DMB), Digital Video Broadcasting (DVB), media flow or the like.

Each of the components of the electronic device according to the present disclosure may be implemented by one or more components and the name of the corresponding component may vary depending on a type of the electronic device. In various embodiments, the electronic device may include at least one of the above-described elements. Some of the above-described elements may be omitted from the electronic device, or the electronic device may further include additional elements. Further, some of the components of the electronic device according to the various embodiments of the present disclosure may be combined to form a single entity, and thus, may equivalently execute functions of the corresponding elements prior to the combination.

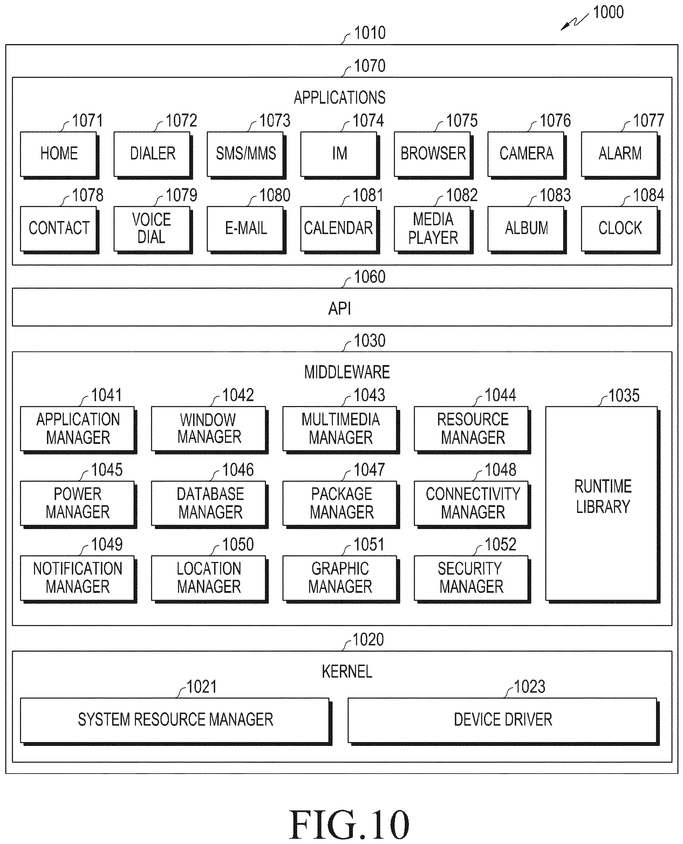

FIG. 10 is a block diagram illustrating an example of a program module according to various embodiments of the present disclosure.

Referring to FIG. 10, according to an embodiment, the program module 1010 (for example, the program 140) may include an Operating System (OS) for controlling resources related to the electronic device (for example, the electronic device 101) and/or various applications (for example, the application program 147) executed in the operating system. The operating system may be, for example, Android, iOS, Windows, Symbian, Tizen, Bada, or the like.

The program module 1010 may include a kernel 1020, middleware 1030, an Application Programming Interface (API) 1060, and/or applications 1070. At least some of the program module 1010 may be preloaded in the electronic device or downloaded in the server (for example, the server 206).

The kernel 1020 (for example, the kernel 141 of FIG. 1) may include, for example, a system resource manager 1021 or a device driver 1023. The system resource manager 1021 may control, allocate, or collect the system resources. According to an embodiment, the system resource manager 1021 may include a process manager, a memory manager, or a file system manager. The device driver 1023 may include, for example, a display driver, a camera driver, a Bluetooth driver, a shared-memory driver, a USB driver, a keypad driver, a Wi-Fi driver, an audio driver, or an Inter-Process Communication (IPC) driver.

The middleware 1030 may provide a function required by the applications 1070 in common or provide various functions to the applications 1070 through the API 1060 so that the applications 1070 may efficiently use limited system resources of the electronic device. According to an embodiment, the middleware 1030 (for example, the middleware 143) may include, for example, at least one of a runtime library 1035, an application manager 1041, a window manager 1042, a multimedia manager 1043, a resource manager 1044, a power manager 1045, a database manager 1046, a package manager 1047, a connectivity manager 1048, a notification manager 1049, a location manager 1050, a graphic manager 1051, and a security manager 1052.

The runtime library 1035 may include, for example, a library module that a compiler uses in order to add new functions through a programming language while the application 1070 is executed. The runtime library 1035 may perform input/output management, memory management, or a function for an arithmetic function.

The application manager 1041 may manage, for example, a life cycle of at least one application among the applications 1070. The window manager 1042 may manage a GUI resource used in a screen. The multimedia manager 1043 may detect a format required for reproducing various media files and encode or decode a media file using a codec appropriate for the corresponding format. The resource manager 1044 may manage resources such as a source code, a memory or a storage space of at least one application among the applications 1070.

The power manager 1045 may operate together with, for example, a Basic Input/Output System (BIOS), so as to manage a battery or power and may provide power information required for the operation of the electronic device. The database manager 1046 may generate, search for, or change a database to be used by at least one of the applications 1070. The package manager 1047 may manage the installation or updating of applications distributed in the form of a package file.

The connectivity manager 1048 may manage wireless connections, for example, Wi-Fi or Bluetooth. The notification manager 1049 may display or notify of an event such as a received message, an appointment, a proximity notification, and the like to a user without disturbance. The location manager 1050 may manage location information of the electronic device. The graphic manager 1051 may manage graphic effects to be provided to a user and user interfaces related to the graphic effects. The security manager 1052 may provide various security functions required for system security or user authentication. According to an embodiment, when the electronic device (for example, electronic device 101) has a call function, the middleware 1030 may further include a telephony manager for managing a voice call function or a video call function of the electronic device.

The middleware 1030 may include a middleware module for forming a combination of various functions of the aforementioned components. The middleware 1030 may provide a module specialized for each type of operating system in order to provide a differentiated function. In addition, a few existing components may be dynamically removed from the middleware 1030, or new components may be added to the middleware 230.

The API 1060 (for example, the API 145) is a set of API programming functions, and a different configuration thereof may be provided according to an operating system. For example, in the case of Android or iOS, one API set may be provided for each platform. In the case of Tizen, two or more API sets may be provided for each platform.

The applications 1070 (for example, the application program 147) may include, for example, one or more applications which can provide functions such as home 1071, dialer 1072, SMS/MMS 1073, Instant Message (IM) 1074, browser 1075, camera 1076, alarm 1077, contacts 1078, voice dialer 1079, email 1080, calendar 1081, media player 1082, album 1083, clock 1084, health care (for example, measuring exercise quantity or blood sugar), or environment information (for example, atmospheric pressure, humidity, or temperature information).

According to an embodiment, the applications 1070 may include an application (hereinafter, referred to as an "information exchange application" for convenience of description) supporting information exchange between the electronic device (for example, the electronic device 101) and an external electronic device (for example, the electronic device 102 or 104). The information exchange application may include, for example, a notification relay application for transmitting predetermined information to the external electronic device, or a device management application for managing the external electronic device.

For example, the notification relay application may include a function of transferring, to the external electronic device (for example, the electronic device 102 or 104), notification information generated from other applications of the electronic device 101 (for example, an SMS/MMS application, an e-mail application, a health care application, or an environmental information application). Further, the notification relay application may receive notification information from, for example, an external electronic device and provide the received notification information to a user. The device management application may manage (for example, install, delete, or update), for example, a function for at least a part of the external electronic device (for example, the electronic device 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an embodiment, the applications 1070 may include an application (for example, health management application) designated according to attributes (for example, attributes of the electronic device such as the type of electronic device which corresponds to a mobile medical device) of the external electronic device (for example, the electronic device 102 or 104). According to an embodiment, the applications 1070 may include an application received from the external electronic device (for example, the server 106, or the electronic device 102 or 104). According to an embodiment, the applications 1070 may include a preloaded application or a third party application which can be downloaded from the server. Names of the elements of the program module 1010, according to the above-described embodiments of the present disclosure, may change depending on the type of OS.

According to various exemplary embodiments of the present disclosure, at least some of the program module 1010 may be implemented in software, firmware, hardware, or a combination of two or more thereof. At least some of the programming module 1010 may be implemented (for example, executed) by, for example, the processor. At least some of the programming module 1010 may include, for example, a module, program, routine, sets of instructions, process, or the like for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

Although the present disclosure has been described with an exemplary embodiment, the present disclosure encompass changes and modifications as fall within the scope of the appended claims.

## Claims

1. An electronic device (20) comprising:
a main body (200);
a cover part (270; 266a) normally coupled to the main body (200) and configured to be attached to and detached from the main body (200); and
a controller (210) configured to:
output a first signal for determining a coupling state of the cover part (270; 266a) with respect to the electronic device (20);
receive a second signal being distorted relative to the first signal;
determine the coupling state of the cover part (270; 266a) with respect to the electronic device (20) based on distortion of the second signal relative to the first signal; and
output a notification message (532) related to coupling of the cover part (270; 266a),
**CHARACTERISED IN THAT**
the controller (210) is further configured to:
determine whether an incompletely coupled portion (490) exists between the cover part (270; 266a) and the electronic device (20) based on the distortion of the second signal relative to the first signal, wherein at least part of the first signal is transmitted through the incompletely covered portion between the cover part and the main body, when the cover part is incompletely coupled to the main body;
determine a location of the incompletely covered portion, and
output the notification message (532) related to the location of the incompletely covered portion.

2. The electronic device of claim 1, wherein the controller (210) is configured to detect generation of an event related to the coupling state of the cover part (270; 266a).

3. The electronic device of claim 2, wherein the event includes at least one of booting of the electronic device (20), insertion or removal of an external memory or a SIM card into or from a socket (224) included in the electronic device (20), insertion of a terminal into a connector (223) included in the electronic device (20) or separation of the inserted terminal, and reception of an output request for voice contents of the electronic device (20).

4. The electronic device of claim 1, wherein the first signal and the second signal include a sound wave.

5. The electronic device of claim 1, wherein the cover part (270; 266a) includes at least one of a battery cover, a connector cover, and a socket cover.

6. The electronic device of claim 1, wherein the first signal is output through a speaker (222) included in the electronic device.

7. The electronic device of claim 1, wherein the distortion of the second signal relative to the first signal include amplitude, phase, or frequency.

8. The electronic device of claim 1, wherein the controller (210) is configured to receive the second signal via one or more microphones (221).

9. The electronic device of claim 8, wherein the controller is further configured to:
control output of the notification message (532) indicating a direction of the incompletely coupled portion (490).

10. The electronic device of claim 6, wherein, when voice contents are output according to a output request for the voice contents, the controller (210) is configured to control to output the first signal simultaneously with the output of the voice contents.

11. A method of operating an electronic device, the method comprising the steps of:
outputting a first signal for determining a coupling state of a cover part (270; 266a) with respect to the electronic device (20), the electronic device comprising a main body (200) and the cover part (270; 266a) normally coupled to the main body and configured to be attached to and detached from the main body;
receiving a second signal being distorted relative to the first signal; and
determining the coupling state of the cover part (270; 266a) with respect to the electronic device (20) based on distortion of the second signal relative to the first signal; and
outputting a notification message (532) related to coupling of the cover part (270; 266a),
**CHARACTERISED BY**
determining whether an incompletely coupled portion (490) exists between the cover part (270; 266a) and the electronic device (20) based on the distortion of the second signal relative to the first signal, wherein at least part of the first signal is transmitted through the incompletely covered portion between the cover part and the main body, when the cover part is incompletely coupled to the main body;
determining a location of the incompletely covered portion, and
outputting the notification message (532) related to the location of the incompletely covered portion.

12. The method of claim 11, further comprising the step of detecting generation of an event related to the coupling state of the cover part (270; 266a).

13. The method of claim 12, wherein the event includes at least one of booting of the electronic device, insertion or removal of an external memory or a SIM card into or from a socket included in the electronic device, insertion of a terminal into a connector included in the electronic device or separation of the inserted terminal, and reception of an output request for voice contents of the electronic device.

14. The method of claim 11, wherein the first signal and the second signal include a sound wave.

15. The method of claim 11, wherein the cover (270; 266a) part includes at least one of a battery cover, a connector cover, and a socket cover.

## Patentansprüche

1. Elektronisches Gerät (20), das Folgendes umfasst:
einen Hauptkörper (200);
einen Abdeckungsteil (270; 266a), der normalerweise mit dem Hauptkörper (200) gekoppelt ist und dazu ausgelegt ist, an dem Hauptkörper (200) befestigt und von diesem entfernt werden zu können; und
eine Steuerung (210), die zu Folgendem ausgelegt ist:
Ausgeben eines ersten Signals zur Bestimmung eines Kopplungszustands des Abdeckungsteils (270; 266a) in Bezug auf das elektronische Gerät (20);
Empfangen eines zweiten Signals, das im Verhältnis zu dem ersten Signal verzerrt ist;
Bestimmen des Kopplungszustands des Abdeckungsteils (270; 266a) in Bezug auf das elektronische Gerät (20) basierend auf der Verzerrung des zweiten Signals im Verhältnis zu dem ersten Signal; und
Ausgeben einer Benachrichtigung (532) in Verbindung mit der Kopplung des Abdeckungsteils (270; 266a),
**DADURCH GEKENNZEICHNET, DASS**
die Steuerung (210) weiterhin zu Folgendem ausgelegt ist:
Bestimmen, ob ein nicht vollständig gekoppelter Abschnitt (490) zwischen dem Abdeckungsteil (270; 266a) und dem elektronischen Gerät (20) vorliegt, basierend auf der Verzerrung des zweiten Signals im Verhältnis zu dem ersten Signal, wobei wenigstens ein Teil des ersten Signals durch den nicht vollständig abgedeckten Abschnitt zwischen dem Abdeckungsteil und dem Hauptkörper übertragen wird, wenn der Abdeckungsteil nicht vollständig mit dem Hauptkörper gekoppelt ist;
Bestimmen einer Stelle des nicht vollständig abgedeckten Abschnitts und Ausgeben der Benachrichtigung (532) in Verbindung mit der Stelle des nicht vollständig abgedeckten Abschnitts.

2. Elektronisches Gerät nach Anspruch 1, wobei die Steuerung (210) dazu ausgelegt ist, die Erzeugung eines Ereignisses in Verbindung mit dem Kopplungszustand des Abdeckungsteils (270; 266a) zu erfassen.

3. Elektronisches Gerät nach Anspruch 2, wobei das Ereignis wenigstens eines der Folgenden umfasst: Booten des elektronischen Geräts (20), Einstecken oder Herausnehmen eines externen Speichers oder einer SIM-Karte in eine bzw. aus einer in dem elektronischen Gerät (20) enthaltenen Aussparung (224), Einstecken eines Endgeräts in einen in dem elektronischen Gerät (20) enthaltenen Verbinder (223) oder Trennen des eingesteckten Endgeräts, und Empfangen einer Ausgabeanforderung für Sprachinhalte des elektronischen Geräts (20).

4. Elektronisches Gerät nach Anspruch 1, wobei das erste Signal und das zweite Signal eine Schallwelle umfasst.

5. Elektronisches Gerät nach Anspruch 1, wobei der Abdeckungsteil (270; 266a) eine Batterieabdeckung, eine Verbinderabdeckung und/oder eine Aussparungsabdeckung umfasst.

6. Elektronisches Gerät nach Anspruch 1, wobei das erste Signal über einen in dem elektronischen Gerät enthaltenen Lautsprecher (222) ausgegeben wird.

7. Elektronisches Gerät nach Anspruch 1, wobei die Verzerrung des zweiten Signals im Verhältnis zu dem ersten Signal eine Amplitude, eine Phase oder eine Frequenz umfasst.

8. Elektronisches Gerät nach Anspruch 1, wobei die Steuerung (210) dazu ausgelegt ist, das zweite Signal über ein oder mehrere Mikrofone (221) zu empfangen.

9. Elektronisches Gerät nach Anspruch 8, wobei die Steuerung weiterhin zu Folgendem konfiguriert ist:
Steuern des Ausgabe der Benachrichtigung (532), die eine Richtung des nicht vollständig gekoppelten Abschnitts (490) anzeigt.

10. Elektronisches Gerät nach Anspruch 6, wobei, wenn Sprachinhalte gemäß einer Ausgabeanforderung für die Sprachinhalte ausgegeben werden, die Steuerung (210) dazu ausgelegt ist, die Ausgabe des ersten Signals gleichzeitig mit der Ausgabe der Sprachinhalte zu steuern.

11. Verfahren zum Betrieb eines elektronischen Geräts, wobei das Verfahren die folgenden Schritte umfasst:
Ausgeben eines ersten Signals zur Bestimmung eines Kopplungszustands eines Abdeckungsteils (270; 266a) in Bezug auf das elektronische Gerät (20), wobei das elektronische Gerät einen Hauptkörper (200) und den Abdeckungsteil (270; 266a) umfasst, der normalerweise mit dem Hauptkörper gekoppelt ist und dazu ausgelegt ist, an dem Hauptkörper befestigt und von diesem entfernt werden zu können;
Empfangen eines zweiten Signals, das im Verhältnis zu dem ersten Signal verzerrt ist;
Bestimmen des Kopplungszustands des Abdeckungsteils (270; 266a) in Bezug auf das elektronische Gerät (20) basierend auf der Verzerrung des zweiten Signals im Verhältnis zu dem ersten Signal; und
Ausgeben einer Benachrichtigung (532) in Verbindung mit der Kopplung des Abdeckungsteils (270; 266a),
**GEKENNZEICHNET DURCH**
das Bestimmen, ob ein nicht vollständig gekoppelter Abschnitt (490) zwischen dem Abdeckungsteil (270; 266a) und dem elektronischen Gerät (20) vorliegt basierend auf der Verzerrung des zweiten Signals im Verhältnis zu dem ersten Signal, wobei wenigstens ein Teil des ersten Signals **durch** den nicht vollständig abgedeckten Abschnitt zwischen dem Abdeckungsteil und dem Hauptkörper übertragen wird, wenn der Abdeckungsteil nicht vollständig mit dem Hauptkörper gekoppelt ist;
Bestimmen einer Stelle des nicht vollständig abgedeckten Abschnitts, und
Ausgeben der Benachrichtigung (532) in Verbindung mit der Stelle des nicht vollständig abgedeckten Abschnitts.

12. Verfahren nach Anspruch 11, weiterhin umfassend den Schritt des Erfassens der Erzeugung eines Ereignisses in Verbindung mit dem Kopplungszustand des Abdeckungsteils (270; 266a).

13. Verfahren nach Anspruch 12, wobei das Ereignis wenigstens eines der Folgenden umfasst: Booten des elektronischen Geräts, Einstecken oder Herausnehmen eines externen Speichers oder einer SIM-Karte in eine bzw. aus einer in dem elektronischen Gerät enthaltenen Aussparung, Einstecken eines Endgeräts in einen in dem elektronischen Gerät enthaltenen Verbinder oder Trennen des eingesteckten Endgeräts, und Empfangen einer Ausgabeanforderung für Sprachinhalte des elektronischen Geräts.

14. Verfahren nach Anspruch 11, wobei das erste Signal und das zweite Signal eine Schallwelle umfassen.

15. Verfahren nach Anspruch 11, wobei der Abdeckungsteil (270; 266a) eine Batterieabdeckung, eine Verbinderabdeckung und/oder eine Aussparungsabdeckung umfasst.

## Revendications

1. Appareil électronique (20) comprenant :
un corps principal (200),
une partie de couvercle (270 ; 266a) normalement couplée au corps principal (200) et conçue pour être installée sur le corps principal (200) et retirée de celui-ci, et
un organe de commande (210) conçu pour :
émettre un premier signal pour déterminer l'état de couplage de la partie de couvercle (270 ; 266a) par rapport à l'appareil électronique (20),
recevoir un deuxième signal présentant une distorsion par rapport au premier signal,
déterminer l'état de couplage de la partie de couvercle (270 ; 266a) par rapport à l'appareil électronique (20) en fonction de la distorsion du deuxième signal par rapport au premier signal, et
émettre un message d'avertissement (532) en lien avec le couplage de la partie de couvercle (270 ; 266a) ;
**CARACTÉRISÉ EN CE QUE**
l'organe de commande (210) est conçu en outre pour :
déterminer s'il existe une partie couplée de manière incomplète (490) entre la partie de couvercle (270 ; 266a) et l'appareil électronique (20) en fonction de la distorsion du deuxième signal par rapport au premier signal, au moins une partie du premier signal étant transmise à travers la partie couverte de manière incomplète entre la partie de couvercle et le corps principal, lorsque la partie de couvercle est couplée de façon incomplète au corps principal, et
déterminer l'emplacement de la partie couverte de manière incomplète, et émettre un message d'avertissement (532) en lien avec l'emplacement de la partie couverte de manière incomplète.

2. Appareil électronique selon la revendication 1, dans lequel l'organe de commande (210) est conçu pour détecter la production d'un événement en lien avec l'état de couplage de la partie de couvercle (270 ; 266a).

3. Appareil électronique selon la revendication 2, dans lequel l'événement comprend le démarrage de l'appareil électronique (20), l'introduction ou le retrait d'une mémoire externe ou d'une carte SIM dans un logement (224) présent sur l'appareil électronique (20), l'insertion d'un terminal dans un connecteur (223) présent sur l'appareil électronique (20) ou la séparation du terminal branché, et/ou la réception d'une demande d'émission de contenu vocal de l'appareil électronique (20).

4. Appareil électronique selon la revendication 1, dans lequel le premier signal et le deuxième signal comprennent une onde sonore.

5. Appareil électronique selon la revendication 1, dans lequel la partie de couvercle (270 ; 266a) comprend un couvercle de batterie, un couvercle de connecteur et/ou un couvercle de logement.

6. Appareil électronique selon la revendication 1, dans lequel le premier signal est émis par le biais d'un haut-parleur (222) présent sur l'appareil électronique.

7. Appareil électronique selon la revendication 1, dans lequel la distorsion du deuxième signal par rapport au premier signal concerne l'amplitude, la phase ou la fréquence.

8. Appareil électronique selon la revendication 1, dans lequel l'organe de commande (210) est conçu pour recevoir le deuxième signal par le biais d'un ou plusieurs microphones (221).

9. Appareil électronique selon la revendication 8, dans lequel l'organe de commande est conçu en outre pour :
commander l'émission du message d'avertissement (532) indiquant la direction de la partie couplée de manière incomplète (490).

10. Appareil électronique selon la revendication 6, dans lequel, lorsque le contenu vocal est émis conformément à une demande d'émission de contenu vocal, l'organe de commande (210) est conçu pour commander l'émission du premier signal simultanément à l'émission du contenu vocal.

11. Procédé d'exploitation d'un appareil électronique, le procédé comprenant les étapes consistant à :
émettre un premier signal pour déterminer l'état de couplage d'une partie de couvercle (270 ; 266a) par rapport à l'appareil électronique (20), l'appareil électronique comprenant un corps principal (200) et la partie de couvercle (270 ; 266a) normalement couplée au corps principal et conçue pour être installée sur le corps principal et retirée de celui-ci,
recevoir un deuxième signal présentant une distorsion par rapport au premier signal,
déterminer l'état de couplage de la partie de couvercle (270 ; 266a) par rapport à l'appareil électronique (20) en fonction de la distorsion du deuxième signal par rapport au premier signal, et
émettre un message d'avertissement (532) en lien avec le couplage de la partie de couvercle (270 ; 266a) ;
**CARACTÉRISÉ PAR**
une détermination visant à savoir s'il existe une partie couplée de manière incomplète (490) entre la partie de couvercle (270 ; 266a) et l'appareil électronique (20) en fonction de la distorsion du deuxième signal par rapport au premier signal, au moins une partie du premier signal étant transmise à travers la partie couverte de manière incomplète entre la partie de couvercle et le corps principal, lorsque la partie de couvercle est couplée de façon incomplète au corps principal,
la détermination de l'emplacement de la partie couverte de manière incomplète, et
l'émission du message d'avertissement (532) en lien avec l'emplacement de la partie couverte de manière incomplète.

12. Procédé selon la revendication 11, comprenant en outre l'étape de la détection de la production d'un événement en lien avec l'état de couplage de la partie de couvercle (270 ; 266a).

13. Procédé selon la revendication 12, dans lequel l'événement comprend le démarrage de l'appareil électronique, l'introduction ou le retrait d'une mémoire externe ou d'une carte SIM dans un logement présent sur l'appareil électronique, l'insertion d'un terminal dans un connecteur présent sur l'appareil électronique ou la séparation du terminal branché, et/ou la réception d'une demande d'émission de contenu vocal de l'appareil électronique.

14. Procédé selon la revendication 11, dans lequel le premier signal et le deuxième signal comprennent une onde sonore.

15. Procédé selon la revendication 11, dans lequel la partie de couvercle (270 ; 266a) comprend un couvercle de batterie, un couvercle de connecteur et/ou un couvercle de logement.
